# EUROPEAN PATENT SPECIFICATION

(11) **EP 2 854 203 B1**
(45) Date of publication and mention of the grant of the patent: **29.11.2017**
(21) Application number: 14186562.6
(22) Date of filing: 26.09.2014
(51) Int. Cl.: H01M 4/133, H01M 4/587, H01M 10/0525, H01M 4/505, H01M 4/525, H01M 4/131, H01M 4/02, H01M 10/0567

(54) **Battery**
Batterie
Batterie

(30) Priority: 30.09.2013 JP 2013205849; 29.08.2014 JP 2014175850
(43) Date of publication of application: 01.04.2015
(73) Proprietor: GS Yuasa International Ltd., Kisshoin, Minami-ku, Kyoto-shi, Kyoto 601-8520 (JP)
(72) Inventor: Kako, Tomonori, Kyoto-shi, Kyoto 601-8520 (JP); Mori, Sumio, Kyoto-shi, Kyoto 601-8520 (JP); Miyazaki, Akihiko, Kyoto-shi, Kyoto 601-8520 (JP); Nakai, Kenta, Kyoto-shi, Kyoto 601-8520 (JP)
(74) Representative: Isarpatent

(56) References cited:
- EP-A2- 2 741 355
- WO-A1-2012/086340
- JP-A- 2010 098 020
- US-A1- 2004 170 898
- US-A1- 2011 318 655

## Description

### FIELD

The present invention relates to a battery including a positive electrode, a negative electrode, a separator disposed between the positive electrode and the negative electrode, and a nonaqueous electrolyte.

### BACKGROUND

In recent years, various kinds of batteries such as lithium secondary batteries have been widely used with promotion of shifting from gasoline vehicles to hybrid vehicles and electric vehicles and popularization of power-assisted bicycles as a worldwide approach for solution to environmental issues. Therefore, for these batteries, it has been increasingly desired to increase power.

Thus, there has been previously proposed a battery, the power of which is increased by using hardly-graphitizable carbon as a negative active material (see, for example, WO 2005/098998). In this battery, power is increased by using hardly-graphitizable carbon having an average particle size D50 of 1 to 20 µm (preferably 4 to 15 µm) as a negative active material formed on a negative electrode. US2004/0170898 discloses a battery with two kinds of spherical hard carbon having different particle sizes as the negative electrode active material.

### SUMMARY

The inventors of the present application have found that when the particle size of hardly-graphitizable carbon is reduced to an average particle size D50 of several µm, power can be effectively increased, but durability is reduced. That is, when the hardly-graphitizable carbon having a small particle size is used as a negative active material for increasing power in the conventional battery, durability is reduced.

An object of the present invention is to provide a battery, the power and durability of which can be increased.

For achieving the above-mentioned object, a battery according to one aspect of the present invention is a battery including a positive electrode, a negative electrode, a separator disposed between the positive electrode and the negative electrode including a negative active material layer containing hardly-graphitizable carbon as a negative active material and an aqueous binder, and a nonaqueous electrolyte. The negative active material layer has a density of not less than 0.81 g/cc and not more than 1.01 g/cc. The negative active material has a particle size D90 of not less than 1.9 µm and not more than 11.5 µm, the particle size D90 being a particle size at which cumulative volume is 90% in particle size distribution.

### BRIEF DESCRIPTION OF THE DRAWINGS

Fig. 1 is an outside perspective view of a battery according to an embodiment of the present invention;
Fig. 2 is a perspective view showing a configuration of an electrode assembly according to the embodiment of the present invention;
Fig. 3 is a sectional view showing the configuration of the electrode assembly according to the embodiment of the present invention;
Fig. 4 is a view showing in a partially developed manner a winding state of the electrode assembly according to the embodiment of the present invention;
Fig. 5A is a graph showing an initial capacity and a capacity after degradation when the particle size D90 is changed;
Fig. 5B is a graph showing initial power and power after degradation when the particle size D90 is changed;
Fig. 6 is a graph showing a capacity decreasing rate and a power decreasing rate when the particle size D90 is changed;
Fig. 7A is a graph showing a capacity after degradation when the negative active material layer density is changed;
Fig. 7B is a graph showing a capacity decreasing rate when the negative active material layer density is changed;
Fig. 8A is a graph showing power after degradation when the negative active material layer density is changed;
Fig. 8B is a graph showing a power decreasing rate when the negative active material layer density is changed;
Fig. 9A is a graph showing a relationship between the particle size D90 and the negative active material layer density;
Fig. 9B is a graph showing a relationship between the particle size D50 and the negative active material layer density;
Fig. 10A is a graph showing a capacity decreasing rate and a power decreasing rate when the value of y in the positive active material: LiₓNi_{y}Co_{z}Mn_{(1-y-z)}O₂ is changed; and
Fig. 10B is a graph showing a capacity decreasing rate and a power decreasing rate when the value of z in the positive active material: LiₓNi_{y}Co_{z}Mn_{(1-y-z)}O₂ is changed.

### DESCRIPTION OF EMBODIMENT

The battery of the invention is defined in the claims. A battery according to one aspect of the present invention is a battery including a positive electrode, a negative electrode, a separator disposed between the positive electrode and the negative electrode including a negative active material layer containing hardly-graphitizable carbon as a negative active material and an aqueous binder, and a nonaqueous electrolyte. The negative active material layer has a density of not less than 0.81 g/cc and not more than 1.01 g/cc. The negative active material has a particle size D90 of not less than 1.9 µm and not more than 11.5 µm, the particle size D90 being a particle size at which cumulative volume is 90% in particle size distribution.

That is, the inventors of the present application have extensively conducted studies and experiments, and resultantly found that when the negative electrode includes a negative active material layer containing hardly-graphitizable carbon as a negative active material and an aqueous binder, an active material filling density of the negative active material layer (negative active material layer density) is not less than 0.81 g/cc and not more than 1.01 g/cc, and the particle size D90 of the negative active material is not less than 1.9 µm and not more than 11.5 µm, power and durability can be increased. That is, when the negative active material layer density is made excessively low, a high capacity and high power cannot be achieved. When the negative active material layer density is made excessively high, the capacity and power are significantly reduced due to degradation, so that durability is reduced. Thus, when the negative active material layer density falls within a proper range, durability can be increased while a high capacity and high power are maintained. When the particle size of the negative active material is made excessively small, the capacity and power are significantly reduced due to degradation, so that durability is reduced. When the negative active material has a large amount of coarse particles, power is reduced because contact between negative active materials having a small particle size becomes insufficient with the coarse particles forming a pillar when the positive electrode, the negative electrode and the separator are superimposed and pressed so as to decrease the electrode thickness. Thus, when the particle size D90 of the negative active material falls within a proper range, durability can be increased while a high capacity and high power are maintained.

Where the density of the negative active material layer is A1 g/cc and the particle size D90 of the negative active material is B1 µm, the relationship of (-0.002 × B1 + 0,817) ≤ A1 ≤ (-0.005 × B1 + 1.001) and 1.9 ≤ B1 ≤ 8.5 may be satisfied.

That is, the inventors of the present application have extensively conducted studies and experiments, and resultantly found that when the negative active material layer density and the particle size D90 satisfy the above relationship, power and durability can be further increased. That is, when the particle size D90 of the negative active material falls within a range of not less than 1.9 µm and not more than 8.5 µm, durability can be further increased while a high capacity and high power are maintained in the case where the negative active material layer density is not less than 0.82 g/cc and not more than 1.01 g/cc when the particle size D90 is 1.9 µm, and in the case where the negative active material layer density is not less than 0.81 g/cc and not more than 0.98 g/cc when the particle size D90 is 8.5 µm.

The negative active material may have a particle size D50 of not less than 1.0 µm and not more than 5.9 µm, the particle size D50 being a particle size at which the cumulative volume is 50% in the particle size distribution.

Thus, the particle size D50 of the negative active material is not less than 1.0 µm and not more than 5.9 µm when the particle size D90 of the negative active material is not less than 1.9 µm and not more than 11.5 µm, and therefore power and durability can be increased.

Where the density of the negative active material layer is A2 g/cc and the particle size D50 of the negative active material is B2 µm, the relationship of (-0.003 × B2 + 0.817) ≤ A2 ≤ (-0.008 × B2 + 1.002) and 1.0 ≤ B2 ≤ 4.6 may be satisfied.

Thus, the particle size D50 of the negative active material is not less than 1.0 µm and not more than 4.6 µm when the particle size D90 of the negative active material is not less than 1.9 µm and not more than 8.5 µm. Therefore when the negative active material layer density and the particle size D50 satisfy the above relationship, power and durability can be further increased. That is, when the particle size D50 falls within a range of not less than 1.0 µm and not more than 4.6 µm, durability can be further increased while a high capacity and high power are maintained in the case where the negative active material layer density is not less than 0.82 g/cc and not more than 1.01 g/cc when the particle size D50 is 1.0 µm, and in the case where the negative active material layer density is not less than 0.81 g/cc and not more than 0.98 g/cc when the particle size D50 is 4.6 µm.

The positive electrode may include as a positive active material a lithium transition metal oxide containing at least one of manganese, cobalt and nickel.

Thus, in a battery using as a positive active material a lithium transition metal oxide containing at least one of manganese, cobalt and nickel, power and durability can be increased.

The positive electrode may include as a positive active material a lithium transition metal composite oxide represented by the composition formula: LiₓNi_{y}Co_{z}Mn_{(1-y-z)}O₂ (where 0.9 ≤ x ≤ 1.5, 0 < y < 1,0 < z < 1 and 0 < 1-y-z).

That is, the inventors of the present application have extensively conducted studies and experiments, and resultantly found that when a lithium transition metal composite oxide represented by the above composition formula is used as a positive active material, power and durability can be increased. Therefore, by using as a positive active material a lithium transition metal composite oxide represented by the composition formula: LiₓNi_{y}Co_{z}Mn_{(1-y-z)}O₂ (where 0.9 ≤ x ≤ 1.5, 0 < y < 1,0 < z < 1 and 0 < 1 - y - z), power and durability can be increased.

The positive electrode may include as a positive active material a lithium transition metal composite oxide represented by the composition formula: LiₓNi_{y}Co_{z}Mn_{(1-y-z)}O₂ (where 0.9 ≤ x ≤ 1.2, 0.33 ≤ y ≤ 0.80, 0.10 ≤ z ≤ 0.34 and 0 < 1 - y - z).

That is, the inventors of the present application have extensively conducted studies and experiments, and resultantly found that when a lithium transition metal composite oxide represented by the above composition formula is used as a positive active material, power and durability can be further increased. Therefore, by using as a positive active material a lithium transition metal composite oxide represented by the composition formula: LiₓNi_{y}Co_{z}Mn_{(1-y-z)}O₂ (where 0.9 ≤ x ≤ 1.2, 0.33 ≤ y ≤ 0.80, 0.10 ≤ z ≤ 0.34 and 0 < 1 - y - z), power and durability can be further increased.

The nonaqueous electrolyte may contain as an additive a film forming material for forming a film on a surface of the negative electrode.

Thus, a film forming material for the negative electrode is added in the nonaqueous electrolyte, and therefore power and durability can be further increased.

According to the battery of the present invention, power and durability can be increased.

Hereinafter, a battery according to an embodiment of the present invention will be described with reference to the drawings. The embodiment described below shows a preferred specific example of the present invention. Values, shapes, materials, components, layouts and connection configurations of components, and so on which are shown in the following embodiment are illustrative, and are not intended to limit the present invention. Among the components in the following embodiment, components that are not described in independent claims indicating the top concept of the present invention will be described as optional components that constitute a more preferred configuration.

First, a configuration of a battery 10 will be described.

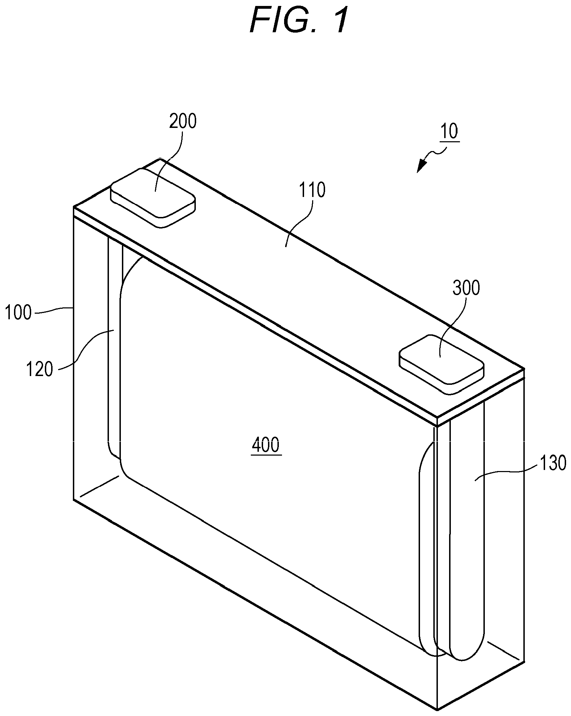

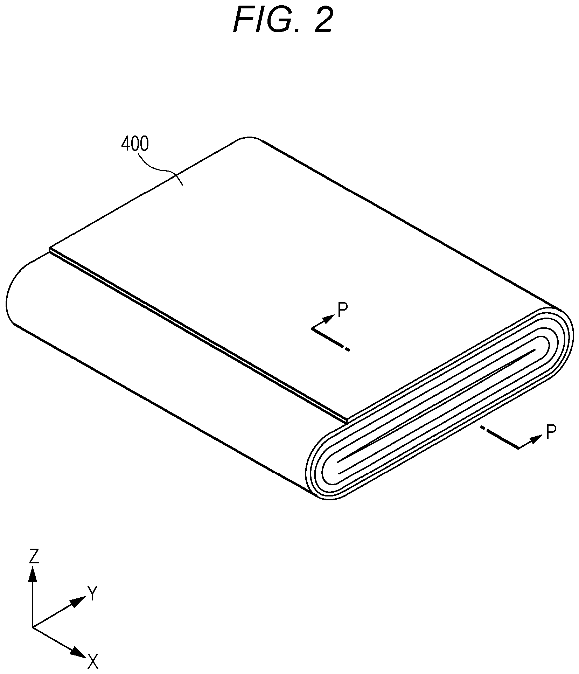

Fig. 1 is an outside perspective view of the battery 10 according to the embodiment of the present invention. Fig. 1 is a view where the inside of a container is transparently seen. Fig. 2 is a perspective view showing a configuration of an electrode assembly 400 according to the embodiment of the present invention.

The battery 10 is a secondary battery, more specifically a nonaqueous electrolyte secondary battery such as a lithium-ion secondary battery, which can be electrically charged and electrically discharged. Particularly, the battery 10 is applied to a hybrid electric vehicle (HEV) in which charge-discharge is performed in a high-rate cycle of 8 CA or more (the capacity is 5 Ah and the current in a cycle is about 40 A). The battery 10 is not limited to a nonaqueous electrolyte secondary battery, and may be a secondary battery other than a nonaqueous electrolyte secondary battery.

As shown in these figures, the battery 10 includes a container 100, a positive electrode terminal 200 and a negative electrode terminal 300, and the container 100 includes a lid plate 110 as an upper wall. An electrode assembly 400, a positive electrode current collector 120 and a negative electrode current collector 130 are disposed on the inner side of the container 100. A liquid such as an electrolyte solution (nonaqueous electrolyte) is included in the container 100 of the battery 10, but the liquid is not illustrated.

The container 100 includes a rectangular tube-shaped housing body which is made of a metal and has a bottom, and the metallic lid plate 110 which closes an opening of the housing body. The inside of the container 100 can be sealed by, for example, welding the lid plate 110 and the housing body after the electrode assembly 400 etc. is stored in the container 100.

The electrode assembly 400 is a member which includes a positive electrode, a negative electrode and a separator, and can store electricity. Specifically, as shown in Fig. 2, the electrode assembly 400 is formed by superimposing the negative electrode and the positive electrode in a layered form with the separator sandwiched therebetween and winding the laminate so as to form an oblong shape as a whole. In Fig. 2, the shape of the electrode assembly 400 is an oblong shape, but may be a circular shape or an elliptic shape. The shape of the electrode assembly 400 is not limited to a winding type, and may be a shape in which flat electrode plates are stacked (stack type). A detailed configuration of the battery body 400 will be described later.

The positive electrode terminal 200 is an electrode terminal electrically connected to the positive electrode of the electrode assembly 400, and the negative electrode terminal 300 is an electrode terminal electrically connected to the negative electrode of the electrode assembly 400. That is, the positive electrode terminal 200 and the negative electrode terminal 300 are metallic electrode terminals for leading electricity stored in the electrode assembly 400 to the outside space of the battery 10, and introducing electricity into the inside space of the battery 10 in order to store electricity in the electrode assembly 400.

The positive electrode current collector 120 is disposed between the positive electrode of the electrode assembly 400 and the side wall of the container 100 and electrically connected to the positive electrode terminal 200 and the positive electrode of the electrode assembly 400. The positive electrode current collector 120 has conductivity and rigidity. Like a positive electrode substrate layer of the electrode assembly 400 which is described later, the positive electrode current collector 120 is formed of aluminum. The negative electrode current collector 130 is disposed between the negative electrode of the electrode assembly 400 and the side wall of the container 100 and electrically connected to the negative electrode terminal 300 and the negative electrode of the electrode assembly 400. The negative electrode current collector 130 has conductivity and rigidity. Like a negative electrode substrate layer of the electrode assembly 400 which is described later, the negative electrode current collector 130 is formed of copper.

The nonaqueous electrolyte (electrolyte solution) included in the container 100 can be selected from various materials. Examples of the organic solvent of the nonaqueous electrolyte include nonaqueous solvents such as ethylene carbonate, propylene carbonate, butylene carbonate, trifluoropropylene carbonate, γ-butyrolactone, γ-valerolactone, sulfolane, 1,2-dimethoxyethane, 1,2-diethoxyethane, tetrahydrofuran, 2-methyltetrahydrofuran, 2-methyl-1,3-dioxolane, dioxolane, fluoroethyl methyl ether, ethylene glycol diacetate, propylene glycol diacetate, ethylene glycol dipropionate, propylene glycol dipropionate, methyl acetate, ethyl acetate, propyl acetate, butyl acetate, methyl propionate, ethyl propionate, propyl propionate, dimethyl carbonate, diethyl carbonate, ethyl methyl carbonate, methyl propyl carbonate, ethyl propyl carbonate, dipropyl carbonate, methyl isopropyl carbonate, ethyl isopropyl carbonate, diisopropyl carbonate, dibutyl carbonate, acetonitrile, fluoroacetonitrile, alkoxy- and halogen-substituted cyclic phosphazenes and chain phosphazenes such as ethoxypentafluorocyclotriphosphazene, diethoxytetrafluorocyclotriphosphazene and phenoxypentafluorocyclotriphosphazene, phosphoric acid esters such as triethyl phosphate, trimethyl phosphate and trioctyl phosphate, boric acid esters such as triethyl borate and tributyl borate, N-methyloxazolidinone and N-ethyloxazolidinone. When a solid electrolyte is used, a porous polymer solid electrolyte film is used as a polymer solid electrolyte, and the polymer solid electrolyte may preferably further contain an electrolyte solution. When a gel-like polymer solid electrolyte is used, an electrolyte solution forming a gel may be different from an electrolyte solution contained in pores. It is to be noted that when high power is required like HEV applications, use of a nonaqueous electrolyte alone is more preferred than use of a solid electrolyte and a polymer solid electrolyte.

The electrolyte salt contained in the nonaqueous electrolyte is not particularly limited, and examples thereof include ionic compounds such as LiClO₄, LiBF₄, LiAsF₆, LiPF₆, LiCF₃SO₃, LiN(SO₂CF₃)₂, L₁N(SO₂C₂F₅)₂, LiN(SO₂CF₃)(SO₂C₄F₉), LiSCN, LiBr, LiI, Li₂SO₄, Li₂B₁₀Cl₁₀, NaClO₄, NaI, NaSCN, NaBr, KClO₄ and KSCN, and a mixture of two or more thereof.

In the battery 10, the above-mentioned organic solvent and electrolyte salt are combined and used as a nonaqueous electrolyte. Among these nonaqueous electrolytes, propylene carbonate, dimethyl carbonate and methyl ethyl carbonate are preferably used in mixture because conductivity of lithium ions is enhanced.

It is desirable that the nonaqueous electrolyte contains as an additive a film forming material for forming a film on a surface of the negative electrode. Examples of the additive include, but are not limited to, lithium difluoro-bis-oxalate phosphate (LiPF₂(Ox)₂, LiFOP) represented by the following chemical formula (1), lithium tetrafluoro- oxalate phosphate (LiPF₄(Ox), LiFOP) represented by the chemical formula (2), lithium bis-oxalate borate (LiBOB) represented by the following chemical formula (3), lithium difluoro- oxalate borate (LiFOB) represented by the following chemical formula (4), lithium difluorophosphate, carbonates such as vinylene carbonate, methyl vinylene carbonate, ethyl vinylene carbonate, propyl vinylene carbonate, phenyl vinylene carbonate, vinyl ethylene carbonate, divinyl ethylene carbonate, dimethyl vinylene carbonate, diethyl vinylene carbonate and fluoroethylene carbonate, vinyl esters such as vinyl acetate and vinyl propionate, sulfides such as diallyl sulfide, allyl phenyl sulfide, allyl vinyl sulfide, allyl ethyl sulfide, propyl sulfide, diallyl disulfide, allyl ethyl disulfide, allyl propyl disulfide and allyl phenyl disulfide, cyclic sulfonic acid esters such as 1,3-propane sultone, 1,4-butane sultone, 1,3-propene sultone and 1,4-butene sultone, cyclic disulfonic acid esters such as methyl methyl disulfonate, ethyl methyl disulfonate, propyl methyl disulfonate, ethyl ethyl disulfonate and propyl ethyl disulfonate, chain sulfonic acid esters such as bis(vinylsulfonyl)methane, methyl methane sulfonate, ethyl methane sulfonate, propyl methane sulfonate, methyl ethane sulfonate, ethyl ethane sulfonate, propyl ethane sulfonate, methyl benzene sulfonate, ethyl benzene sulfonate, propyl benzene sulfonate, phenyl methane sulfonate, phenyl ethane sulfonate, phenyl propane sulfonate, methyl benzyl sulfonate, ethyl benzyl sulfonate, propyl benzyl sulfonate, benzyl methane sulfonate, benzyl ethane sulfonate and benzyl propane sulfonate, sulfurous acid esters such as dimethyl sulfite, diethyl sulfite, ethyl methyl sulfite, methyl propyl sulfite, ethyl propyl sulfite, diphenyl sulfite, methyl phenyl sulfite, ethyl phenyl sulfite, vinyl ethylene sulfite, divinyl ethylene sulfite, propylene sulfite, vinyl propylene sulfite, butylene sulfite, vinyl butylene sulfite, vinylene sulfite and phenyl ethylene sulfite, sulfuric acid esters such as dimethyl sulfate, diethyl sulfate, diisopropyl sulfate, dibutyl sulfate, ethylene glycol sulfuric acid esters, propylene glycol sulfuric acid esters, butylene glycol sulfuric acid esters and pentene glycol sulfuric acid esters, aromatic compounds such as benzene, toluene, xylene, fluorobenzene, biphenyl, cyclohexylbenzene, 2-fluorobiphenyl, 4-fluorobiphenyl, diphenyl ether tert-butylbenzene, ortho-terphenyl, meta-terphenyl, naphthalene, fluoronaphthalene, cumene, fluorobenzene and 2,4-difluoroanisole, halogen-substituted alkanes such as perfluorooctane, and silyl esters such as tristrimethylsilyl borate, tristrimethylsilyl sulfate and tristrimethylsilyl phosphate. For the additive, the compounds shown above as an example may be used alone or in combination of two or more thereof.

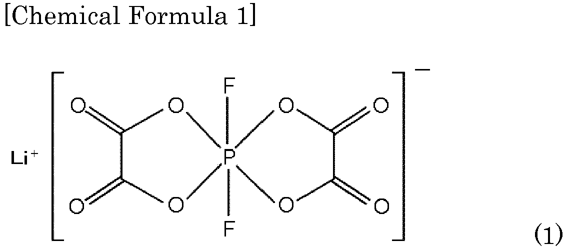

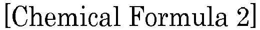

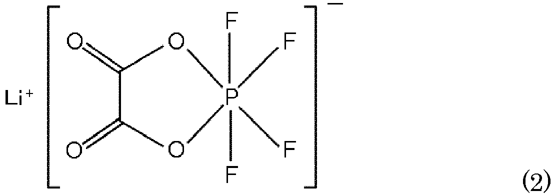

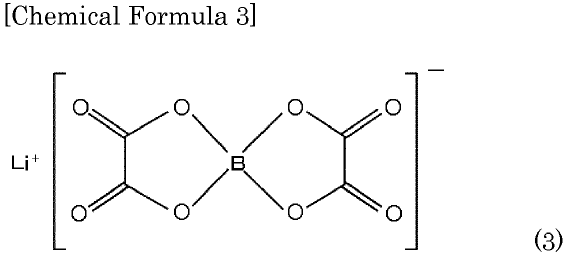

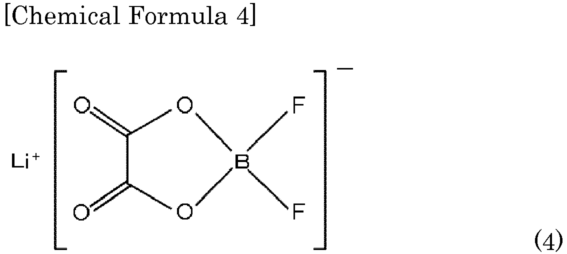

A detailed configuration of the battery body 400 will now be described.

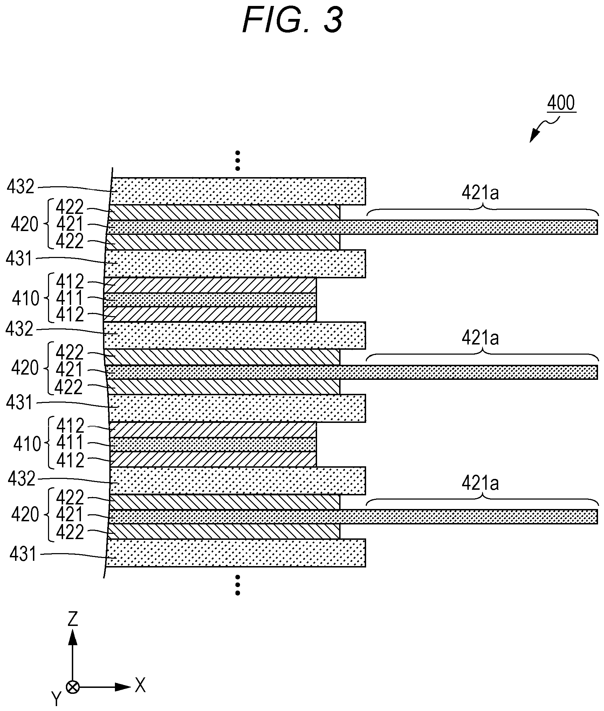

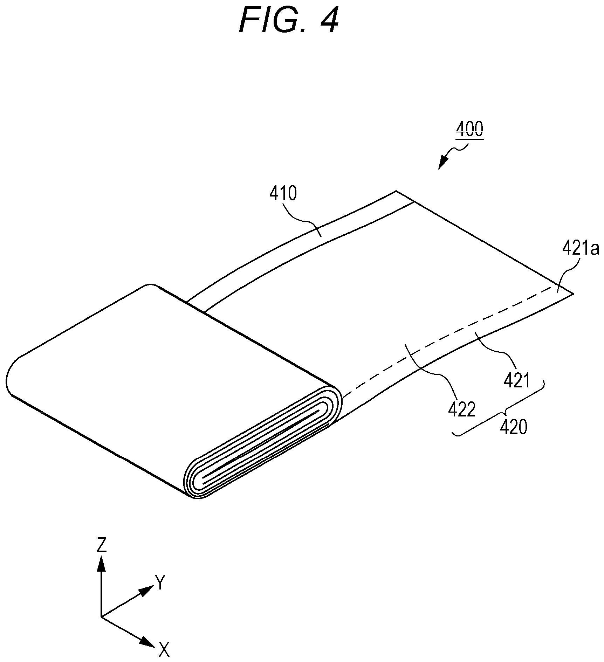

Fig. 3 is a sectional view showing a configuration of the electrode assembly 400 according to the embodiment of the present invention. Specifically, Fig. 3 shows in a magnified scale a cross section when the electrode assembly 400 shown in Fig. 2 is cut along the cross section P-P. Fig. 4 is a view showing in a partially developed manner a winding state of the electrode assembly 400 according to the embodiment of the present invention. In Fig. 4, the separator is omitted for convenience of explanation.

As shown in these figures, the electrode 400 is formed by superimposing a positive electrode 410, a negative electrode 420 and two separators 431 and 432. Specifically, they are superimposed with the separator 431 or 432 disposed between the positive electrode 410 and the negative electrode 420.

The positive electrode 410 includes a positive electrode substrate layer 411 and a positive active material layer 412. The negative electrode 420 includes a negative electrode substrate layer 421 and a negative active material layer 422.

The positive electrode substrate layer 411 is a long belt-shaped conductive current collecting foil composed of aluminum or an aluminum alloy. The negative electrode substrate layer 421 is a long belt-shaped conductive current collecting foil composed of copper or a copper alloy. As the current collecting foil, a known material such as nickel, iron, stainless steel, titanium, baked carbon, a conductive polymer, conductive glass or an Al-Cd alloy can also be used as appropriate.

The positive active material layer 412 is an active material layer formed on the surface of the positive electrode substrate layer 411 (both surfaces in a positive direction and a negative direction on the Z axis in Fig. 3). The positive active material layer 412 contains a positive active material.

Here, as the positive active material to be used for the positive active material layer 412, a known material can be used as appropriate as long as it is a positive active material capable of absorbing and releasing lithium ions. The positive active material can be selected from, for example, composite oxides represented by LiₓMO_{y} (M represents at least one transition metal) (LiₓCoO₂, LiₓNiO₂, LiₓMn₂O₄, LiₓMnO₃, LiₓNi_{y}Co_{(1-y)}O₂, LiₓNi_{y}Mn_{z}Co_{(1-y-z)}O₂, LiₓNi_{y}Mn_{(2-y)}O₄, etc.), or polyanion compounds represented by Li_{w}Meₓ(XO_{y})_{z} (Me represents at least one transition metal, and X represents, for example, P, Si, B or V) (LiFePO₄, LiMnPO₄, LiNiPO₄, LiCoPO₄, Li₃V₂(PO₄)₃, Li₂MnSiO₄, Li₂CoPO₄F, etc.). Elements or polyanions in these compounds may be partially replaced by other elements or anion species, and the surface may be coated with a metal oxide such as ZrO₂, MgO or Al₂O₃, or carbon. Further, examples of the positive active material include, but are not limited to, conductive polymers such as disulfide, polypyrrole, polyaniline, polyparastyrene, polyacetylene and polyacene-based materials, and pseudo-graphite structure carbonaceous materials. These compounds may be used alone, or may be used as a mixture of two or more thereof.

Preferably, the positive electrode 410 includes as a positive active material a lithium transition metal oxide containing at least one of manganese, cobalt and nickel, particularly preferably a lithium transition metal composite oxide represented by the composition formula: LiₓNi_{y}Co_{z}Mn_{(1-y-z)}O₂ (where 0.9 ≤ x ≤ 1.5, 0 < y < 1,0 < z < 1 and 0 < 1-y-z). Further preferably, the positive electrode 410 includes as a positive active material a lithium transition metal composite oxide represented by the composition formula: LiₓNi_{y}Co_{z}Mn_{(1-y-z)}O₂ (where 0.9 ≤ x ≤ 1.2, 0.33 ≤ y ≤ 0.80, 0.10 ≤ z ≤ 0.34 and 0 < 1-y-z). Details will be described later.

The negative active material layer 422 is an active material layer formed on the surface of the negative electrode substrate layer 421 (both surfaces in a positive direction and a negative direction on the Z axis in Fig. 3). Here, as the negative active material contained in the negative active material layer 422, hardly-graphitizable carbon (hard carbon) is used. A conductive assistant for a negative electrode may be added. While the conductive assistant for a negative electrode is not particularly limited as long as it has electron conductivity, examples include graphites such as natural graphite (scalelike graphite etc.), artificial graphite and expanded graphite, carbon blacks such as acetylene black, ketjen black, channel black, furnace black, lamp black and thermal black, conductive fibers such as carbon fibers and metal fibers, metal powders such as those of copper and nickel, and organic conductive materials such as polyphenylene derivatives. These conductive assistants for a negative electrode may be used alone, or may be used as a mixture of two or more thereof. Among these conductive assistants for a negative electrode, artificial graphite, acetylene black and carbon fibers are particularly preferred. The added amount of the conductive assistant for a negative electrode should be 5% by weight or less based on the weight of the negative active material.

Specifically, the negative active material (hardly-graphitizable carbon) contained in the negative active material layer 422 has a coating density (packing density of a negative electrode composite applied onto the negative electrode current collector; Hereinafter referred to as a "negative active material layer density) of not less than 0.81 g/cc and not more than 1.01 g/cc and a particle size D90 of not less than 1.9 µm and not more than 11.5 µm, the particle size D90 being a particle size at which the cumulative volume is 90% in the particle size distribution. Further specifically, it is preferred that where the negative active material layer density is A1 g/cc and the particle size D90 of the negative active material is B1 µm, the relationship of (-0.002 × B1 + 0.817) ≤ A1 ≤ (-0.005 × B1 + 1.001) and 1.9 ≤ B1 ≤ 8.5 (hereinafter, referred to as "relational formula 1") is satisfied.

Alternatively, it is preferred that the negative active material contained in the negative active material layer 422 has a particle size D50 of not less than 1.0 µm and not more than 5.9 µm, the particle size D50 being a particle size at which the cumulative volume is 50% in the particle size distribution, and it is further preferred that where the negative active material layer density is A2 g/cc and the particle size D50 of the negative active material is B2 µm, the relationship of (-0.003 × B2 + 0.817) ≤ A2 ≤ (-0.008 × B2 + 1.002) and 1.0 ≤ B2 ≤ 4.6 (hereinafter, referred to as "relational formula 2") is satisfied. Details thereof will be described later.

The particle size D50 is an average particle size (also referred to as a median size) at which the volume cumulative frequency is 50% when a volume cumulative distribution is drawn from the small-size side in the particle size distribution, and is more specifically a size in which when a powder is divided into two parts with a certain particle size as a boundary, the amount of the larger part and the amount of the smaller part are equal to each other. The particle size D90 is a particle size at which the cumulative volume frequency is 90% in the particle size distribution.

The negative electrode 420 has a negative active material non-formed region 421a where the negative active material layer 422 is not formed. The negative active material non-formed region 421a is an area of the negative electrode substrate layer 421 where the negative active material layer 422 is not formed, and is specifically an end of the negative electrode substrate layer 421 (end in a positive direction on the X axis). A plurality of negative active material non-formed regions 421a are bonded to the negative electrode current collector 130 to electrically connect the negative electrode terminal 300 and the negative electrode 420.

Similarly, the positive electrode 410 has, at an end in a negative direction on the x axis, a positive active material non-formed region where the positive active material layer 412 is not formed, and a plurality of positive active material non-formed regions are bonded to the positive electrode current collector 120 to electrically connect the positive electrode terminal 200 and the positive electrode 410.

The separators 431 and 432 are microporous sheets composed of a resin, and are impregnated with a nonaqueous electrolyte containing an organic solvent and an electrolyte salt. Here, as the separators 431 and 432, fabrics insoluble in an organic solvent, nonwoven fabrics and synthetic resin microporous films composed of a polyolefin resin such as polyethylene are used. The separator may be one formed by superimposing a plurality of microporous films different in material, weight average molecular weight and porosity, or one containing an appropriate amount of various kinds of additives such as a plasticizer, an antioxidant and a flame retardant, or one with an inorganic oxide such as silica applied to one surface or both surfaces thereof. Particularly, synthetic resin microporous films are suitably used. Among them, polyolefin-based microporous films such as polyethylene and polypropylene microporous films, polyethylene and polypropylene microporous films combined with an aramid and a polyimide, or microporous films obtained by combination thereof are suitably used in terms of thickness, film strength, film resistance and so on.

The negative active material layer 422 that forms the negative electrode 420 contains a negative active material and an aqueous binder. The aqueous binder herein includes a binder such as polymer fine particles or a rubber material dispersible in water or soluble in water and a thickener as a paste viscosity regulator, which exist alone or as a mixture, and for each of the binder and the thickener, a known material can be used as appropriate. Examples of the binder applied as an aqueous binder include polytetrafluoroethylene, styrene-butadiene rubber, polyacrylate, polyurethane and polyacrylic acid. Examples of the thickener include polysaccharides such as methyl cellulose and carboxymethyl cellulose, and sodium salts and ammonium salts thereof. In other words, what is left after removing the aqueous binder from the negative active material layer 422 is a negative active material, and the negative active material does not contain a binder and a thickener. That is, the negative active material layer 422 contains the negative active material and the aqueous binder, and the negative active material layer density is a packing density of a negative electrode composite containing the negative active material and the aqueous binder, and is calculated with the weights thereof included.

As the binder contained in the positive active material layer 412 that forms the positive electrode 410, a solvent-based binder may be used besides the above-described aqueous binder. For the solvent-based binder, a known material can be used as appropriate, and examples thereof include polyvinylidene fluoride (PVDF). For the positive active material, similarly to the negative active material, what is left after removing the aqueous binder or a solvent-based binder from the positive active material layer 412 is a positive active material, and the positive active material does not contain a binder. That is, the positive active material layer 412 contains the positive active material and the aqueous binder or solvent-based binder, and the positive active material layer density is a packing density of a positive electrode composite containing the positive active material and the binder, and is calculated with the weights thereof included.

### Examples

First, a method for producing a battery 10 will be described. Specifically, batteries in Examples 1 to 72 and Comparative Examples 1 to 35 described later were prepared in the following manner. Examples 1 to 72 all relate to the battery 10 according to the embodiment described above.

### (1-1) Preparation of Positive Electrode

LiNi_{1/3}Co_{1/3}Mn_{1/3}O₂ was used as a positive active material, acetylene black was used as a conductive assistant, and PVDF was used as a binder. A positive electrode paste was prepared by mixing and kneading the conductive assistant in an amount of 4.5% by weight, the binder in an amount of 4.5% by weight and the positive active material in an amount of 91% by weight using N-methyl-2-pyrrolidone (NMP) as a solvent. The prepared positive electrode paste was applied onto a 15 µm-thick aluminum foil at a weight of 6.9 mg/cm² such that the width was 83 mm and the width of an uncoated area (positive active material non-formed region) was 11 mm, dried, and then roll-pressed so that the packing density of the active material in the positive active material layer was 2.25 g/cc, and dried in vacuum to remove moisture.

### (1-2) Preparation of Negative Electrode

Hardly graphitizable carbon having the particle size shown in Table 1 below was used as a negative active material. As an aqueous binder, styrene-butadiene rubber (hereinafter, referred to as "SBR") and an ammonium salt of carboxymethyl cellulose (hereinafter, referred to as "CMC") were used. SBR in an amount of 2% by weight, CMC in an amount of 1% by weight and the negative active material in an amount of 97% by weight were mixed and kneaded to prepare a negative electrode paste. The prepared negative electrode paste was applied onto a 8 µm-thick copper foil at a weight of 3.0 mg/cm² such that the width was 87 mm and the width of an uncoated area (positive active material non-formed region) was 9 mm, dried, and then roll-pressed so that the density shown in Table 1 was achieved as a negative active material layer density, and dried in vacuum to remove moisture.

### (1-3) Preparation of Separator

For the separator, a 21 µm-thick polyethylene microporous film having an air permeability of about 100 sec/100 cc was used.

### (1-4) Production of Nonaqueous Electrolyte

The nonaqueous electrolyte was prepared in the following manner: in a solvent obtained by mixing propylene carbonate in an amount of 30% by volume, dimethyl carbonate in an amount of 40% by volume and ethyl methyl carbonate in an amount of 30% by volume, LiPF₆ was dissolved such that the salt concentration was 1.2 mol/L, and vinylene carbonate was added in an amount of 0.3% by weight.

### (1-5) Preparation of Battery

The positive electrode, the negative electrode and the separator were superimposed and wound, the positive active material non-formed region of the positive electrode and the negative active material non-formed region of the negative electrode were welded, respectively, to a positive electrode current collector and a negative electrode current collector. The electrode assembly was included in a container, the container and a lid plate were welded to each other, the nonaqueous electrolyte was injected, and the container was closed.

For each of the batteries of Examples 1 to 72 and Comparative Examples 1 to 35 prepared in the manner described above, the particle size D50 or particle size D90 of the negative active material (hardly-graphitizable carbon) and the negative active material layer density are shown in Table 1.

The negative active material layer density described in Table 1 can be obtained in the following manner. First, the battery is discharged at a current of 5 A to 2.0V, and then held at 2.0 V for 5 hours. After being held, the battery is rested for 5 hours, and then placed in a dry room or a glove box under an argon atmosphere, and an electrode assembly 400 is taken out from the battery container. A negative electrode 420 is taken out from the electrode assembly 400, the negative electrode 420 is washed three or more times with dimethyl carbonate (DMC) having a purity of 99.9% and a water content of 20 ppm or less, and DMC is removed by drying in vacuum. Thereafter, the negative electrode 420 is cut to a predefined area S (cm²), e.g. 2 cm × 2 cm, exclusive of a negative active material non-formed region 421a, and a thickness T1 (cm) and a weight W1 (g) are measured. A negative active material layer and a current collecting foil (negative electrode substrate layer) are separated from each other by, for example, immersing the negative electrode in pure water. A thickness T2 (cm) and a weight W2 (g) of the separated current collecting foil are measured. A negative active material layer density can be calculated from the equation : a negative active material layer density = {(W1 - W2) / (T1 - T2)} / S.

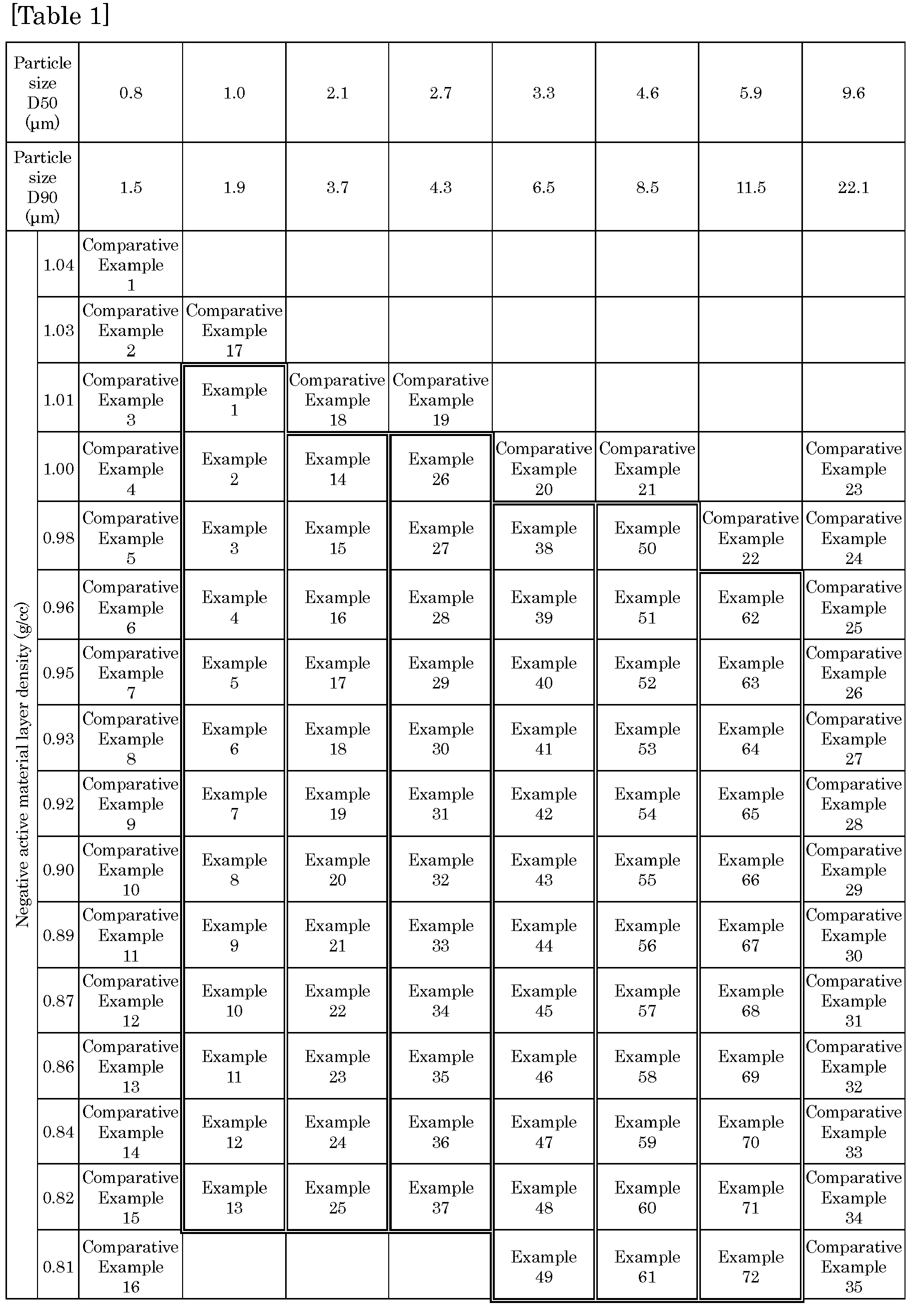

Next, battery evaluation tests were conducted by determining the following values.

### (2-1) Capacity Confirmation Test

The prepared battery was charged at a constant current constant voltage with a charge current of 5 A and a voltage of 4.2 V for 3 hours in a thermostatic bath at 25°C, rested for 10 minutes, and then discharged at a constant current to 2.4 V with a discharge current of 5 A to measure a discharge capacity Q of the battery.

### (2-2) Low-Temperature Power Confirmation Test

The battery after the capacity confirmation test was charged by 20% of the discharge capacity obtained from the capacity confirmation test, so that the SOC (State Of Charge) of the battery was adjusted to 20%. The battery was then held at -10°C for 4 hours, and then discharged at a constant voltage of 2.3 V for 1 second, and low-temperature power P was calculated from a current value at 1 second.

### (2-3) Charge-Discharge Cycle Test

For determining test conditions for the charge-discharge cycle test, a battery adjusted to have a SOC of 50% was held at 55°C for 4 hours, and charged at a constant current of 40 A until the battery had a SOC of 80%. The battery was then discharged at a constant current of 40 A from a SOC of 80% to a SOC of 20% to determine a charge voltage V80 at a SOC of 80% and a discharge voltage V20 at a SOC of 20%.

The cycle test at 55°C was continuously conducted at a constant current of 40 A without providing a rest period, with the cutoff voltage during charge being V80 and the cutoff voltage during discharge being V20. The cycle time was set to 3000 hours in total. After completion of the cycle test for 3000 hours, the battery was held at 25°C for 4 hours, and the foregoing capacity confirmation test and low-temperature power confirmation test were conducted. A capacity decreasing rate after the cycle test was calculated from the equation: capacity decreasing rate = 100 - Q2 / Q1 × 100 where Q1 is a capacity (initial capacity) before the cycle test and Q2 is a capacity (capacity after degradation) after the cycle test. Similarly, a power decreasing rate was calculated from the equation: power decreasing rate = 100 - P2 / P1 × 100 where P1 is power (initial power) before the cycle test and P2 is power (power after degradation) after the cycle test.

The initial capacity Q1 of the battery acquired in the manner described above is shown in Table 2 below, the capacity after degradation Q2 is shown in Table 3 below, the capacity decreasing rate is shown in Table 4 below, the initial power P1 of the battery is shown in Table 5 below, the power after degradation P2 is shown in Table 6 below, and the power decreasing rate is shown in Table 7 below.

That is, in Table 2 below, comparison is made of all examples and comparative examples shown in Table 1 (Examples 1 to 72 and Comparative Examples 1 to 35) for the initial capacity of the battery when the particle size D50 or particle size D90 of the negative active material (hardly-graphitizable carbon) and the negative active material layer density are changed. In Table 3 below, comparison is made of all examples and comparative examples for the capacity after degradation of the battery when the particle size D50 or particle size D90 and the negative active material layer density are changed. In Table 4 below, comparison is made of all examples and comparative examples for the capacity decreasing rate of the battery when the particle size D50 or particle size D90 and the negative active material layer density are changed.

Further, in Table 5 below, comparison is made of all examples and comparative examples for the initial power of the battery when the particle size D50 or particle size D90 and the negative active material layer density are changed. In Table 6 below, comparison is made of all examples and comparative examples for the power after degradation of the battery when the particle size D50 or particle size D90 and the negative active material layer density are changed. In Table 7 below, comparison is made of all examples and comparative examples for the power decreasing rate of the battery when the particle size D50 or particle size D90 and the negative active material layer density are changed.

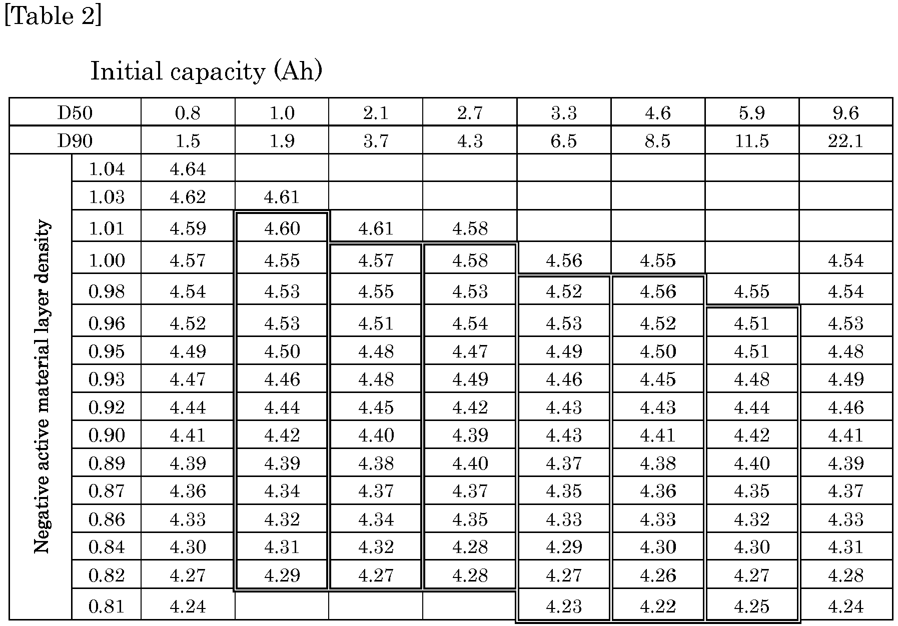

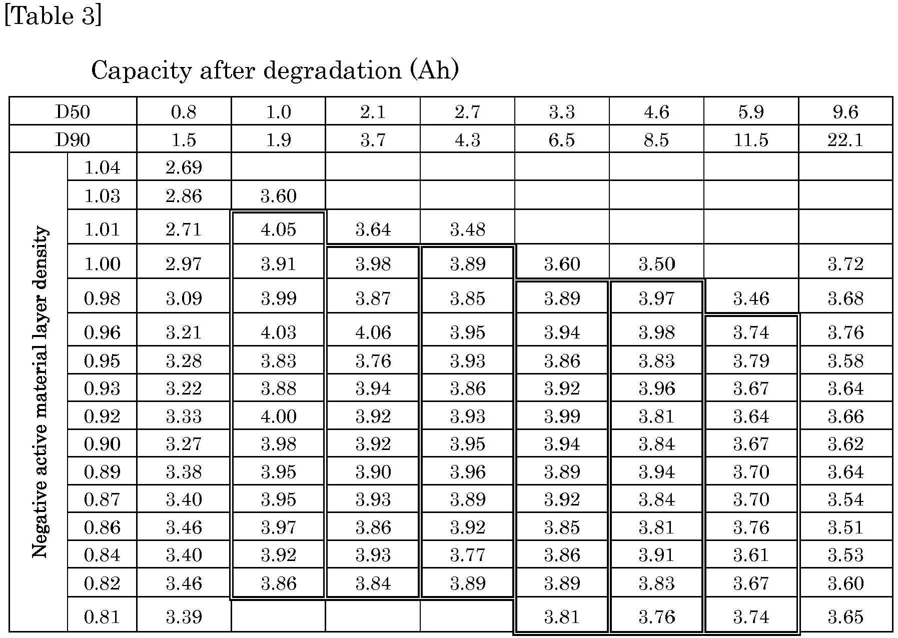

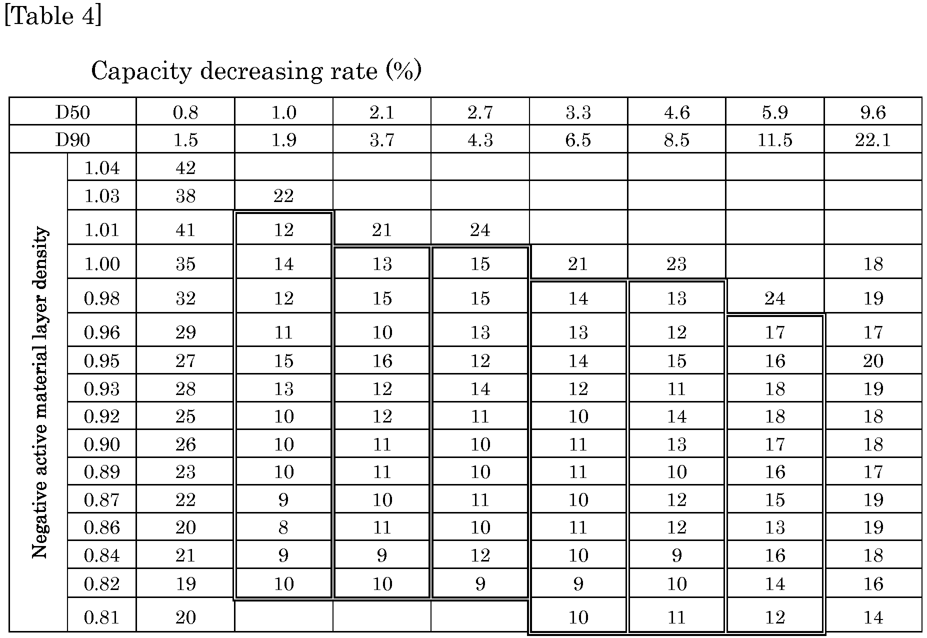

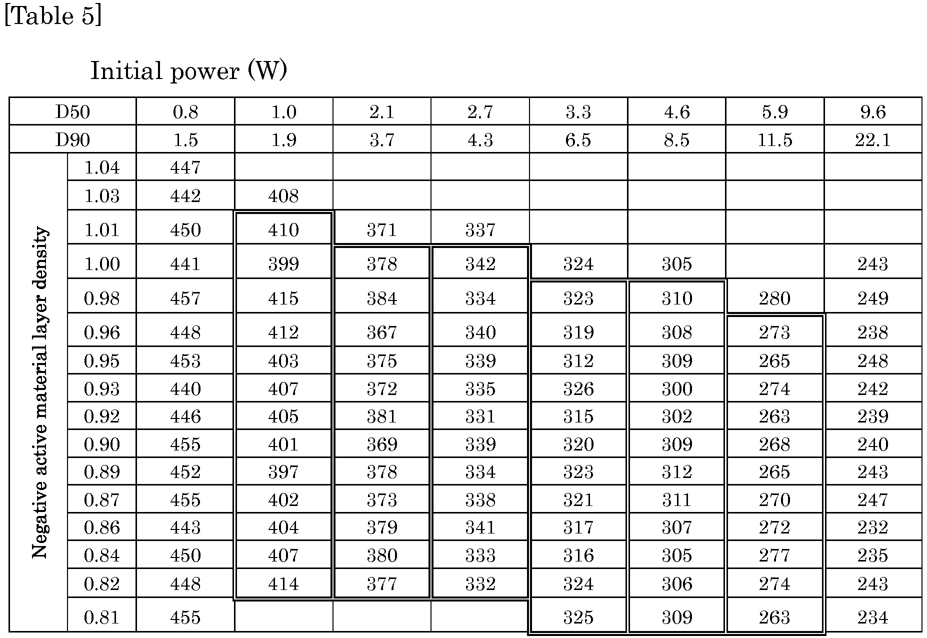

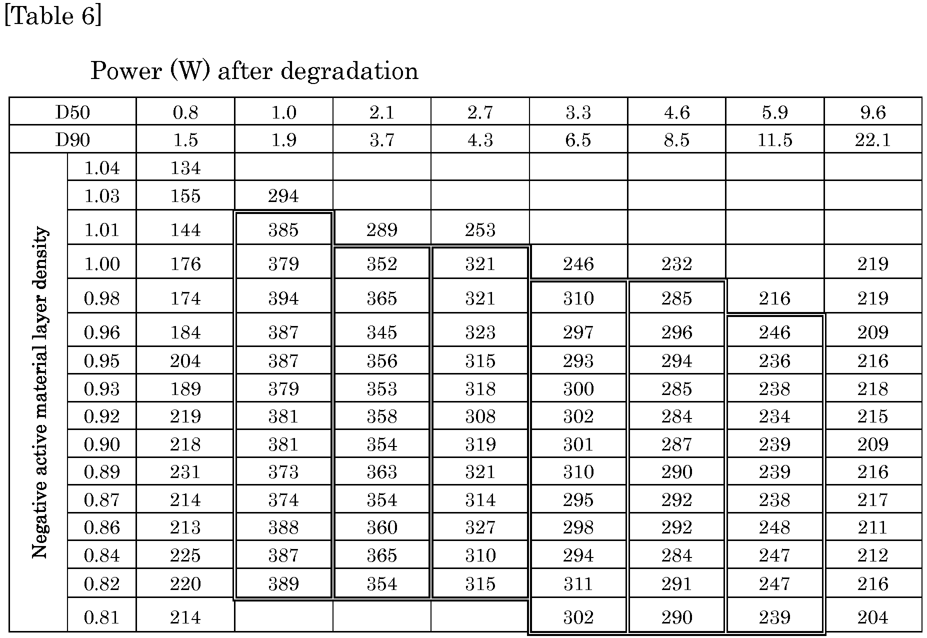

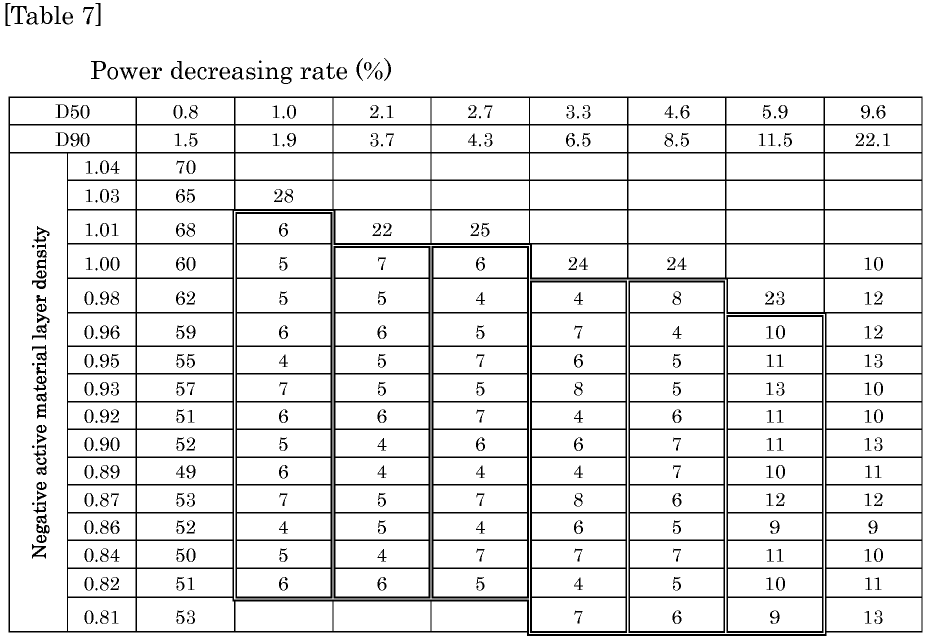

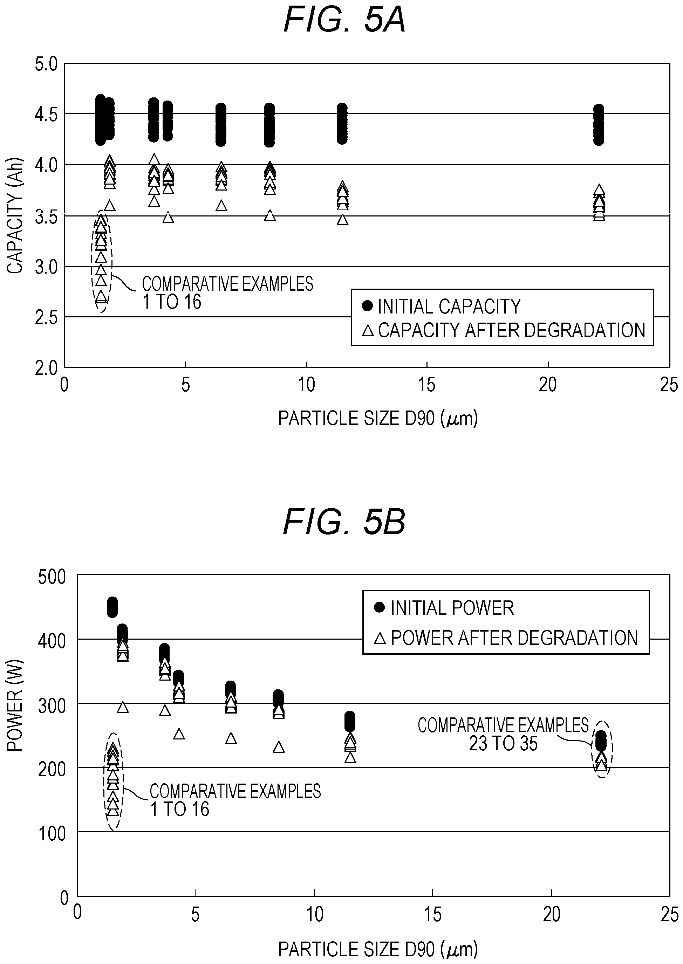

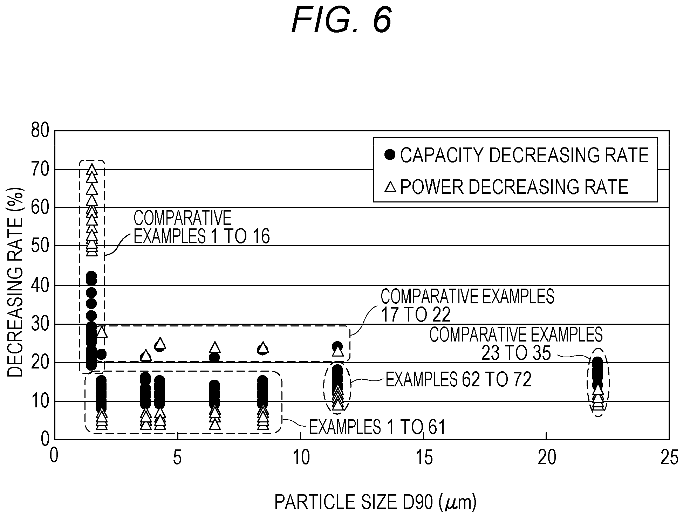

Fig. 5A is a graph showing an initial capacity and a capacity after degradation when the particle size D90 is changed. Fig. 5B is a graph showing initial power and power after degradation when the particle size D90 is changed. Fig. 6 is a graph showing a capacity decreasing rate and a power decreasing rate when the particle size D90 is changed.

As shown in Table 3 and Fig. 5A, the capacity after degradation in Comparative Examples 1 to 16 (particle size D90: 1.5 µm) sharply decreases as compared to Examples 1 to 72. As shown in Table 6 and Fig. 5B, the power after degradation in Comparative Examples 1 to 16 (particle size D90: 1.5 µm) sharply decreases as compared to Examples 1 to 72. As shown in Tables 4 and 7 and Fig. 6, the capacity decreasing rate and the power decreasing rate in Comparative Examples 1 to 16 (particle size D90: 1.5 µm) sharply increase. That is, when the particle size D90 is 1.9 µm or more, a decrease in capacity and power due to degradation can be suppressed to increase durability.

As shown in Tables 5 and 6 and Fig. 5B, the initial power and power after degradation in Comparative Examples 23 to 35 (particle size D90: 22.1 µm) decrease as compared to Examples 1 to 72. As shown in Tables 4 and 7 and Fig. 6, the capacity decreasing rate and the power decreasing rate in Comparative Examples 23 to 35 (particle size D90: 22.1 µm) sharply increase as compared to Examples 1 to 61. That is, when the particle size D90 is 11.5 µm or less, a decrease in power can be suppressed to increase power.

As shown in Tables 1 to 7, the particle size D50 is not less than 1.0 µm and not more than 5.9 µm when the particle size D90 is not less than 1.9 µm and not more than 11.5 µm, and therefore when the particle size D50 is not less than 1.0 µm and not more than 5.9 µm, power and durability can be increased.

Further, as shown in Tables 4 and 7 and Fig. 6, the capacity decreasing rate and the power decreasing rate in Examples 62 to 72 (particle size D90: 11.5 µm) sharply increase as compared to Examples 1 to 61. That is, when the particle size D90 is 8.5 µm or less, a decrease in capacity and power due to degradation can be suppressed to increase durability.

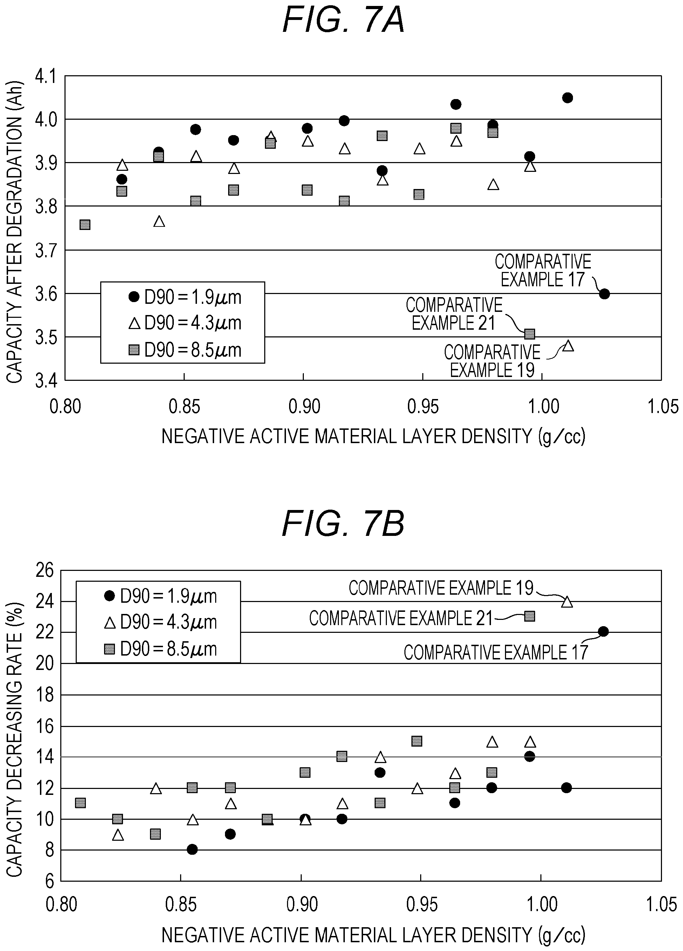

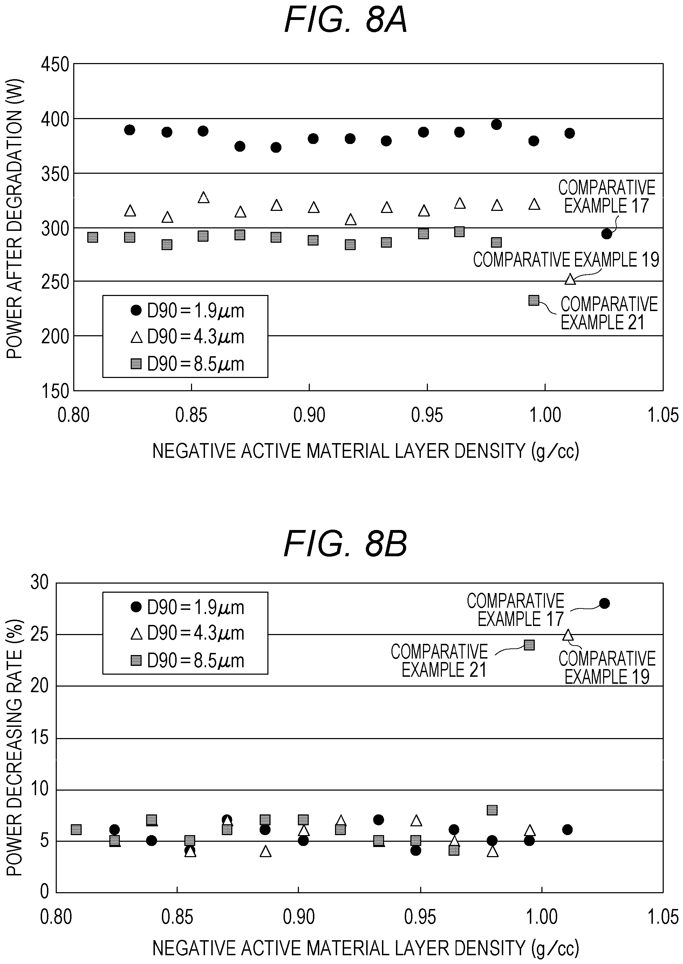

Fig. 7A is a graph showing a capacity after degradation when the negative active material layer density is changed, and Fig. 7B is a graph showing a capacity decreasing rate when the negative active material layer density is changed. Fig. 8A is a graph showing power after degradation when the negative active material layer density is changed, and Fig. 8B is a graph showing a power decreasing rate when the negative active material layer density is changed.

In these graphs, only data with the particle size D90 of 1.9, 4.3 and 8.5 µm is shown, and other data with the particle size D90 of 1.5, 3.7, 6.5, 11.5 and 22.1 µm is omitted for convenience of explanation.

As shown in Tables 2 to 7 and, Fig. 6 and Figs. 7A to 8B, when the particle size D90 is 1.9 µm, the capacity after degradation and power after degradation in Comparative Example 17 (negative active material layer density: 1.03 g/cc) sharply decrease as compared to Examples 1 to 13, and the capacity decreasing rate and power decreasing rate in Comparative Example 17 sharply increase as compared to Examples 1 to 13. That is, when the particle size D90 is 1.9 µm, a decrease in capacity and power due to degradation can be suppressed to increase durability when the negative active material layer density is 1.01 g/cc or less.

Similarly, when the particle size D90 is 3.7 and 4.3 µm, the capacity after degradation and power after degradation in Comparative Examples 18 and 19 (negative active material layer density: 1.01 g/cc) sharply decrease as compared to Examples 14 to 25 and 26 to 37, and the capacity decreasing rate and power decreasing rate in Comparative Examples 18 and 19 sharply increase as compared to Examples 14 to 25 and 26 to 37. That is, when the particle size D90 is 3.7 and 4.3 µm, a decrease in capacity and power due to degradation can be suppressed to increase durability when the negative active material layer density is 1.00 g/cc or less.

Similarly, when the particle size D90 is 6.5 and 8.5 µm, the capacity after degradation and power after degradation in Comparative Examples 20 and 21 (negative active material layer density: 1.00 g/cc) sharply decrease as compared to Examples 38 to 49 and 50 to 61, and the capacity decreasing rate and power decreasing rate in Comparative Examples 20 and 21 sharply increase as compared to Examples 38 to 49 and 50 to 61. That is, when the particle size D90 is 6.5 and 8.5 µm, a decrease in capacity and power due to degradation can be suppressed to increase durability when the negative active material layer density is 0.98 g/cc or less.

From the viewpoint of increasing the capacity and increasing power, the negative active material layer density is preferably 0.82 g/cc or more when the particle size D90 is 1.9 to 4.3 µm, and the negative active material layer density is preferably 0.81 g/cc or more when the particle size D90 is 6.5 and 8.5 µm.

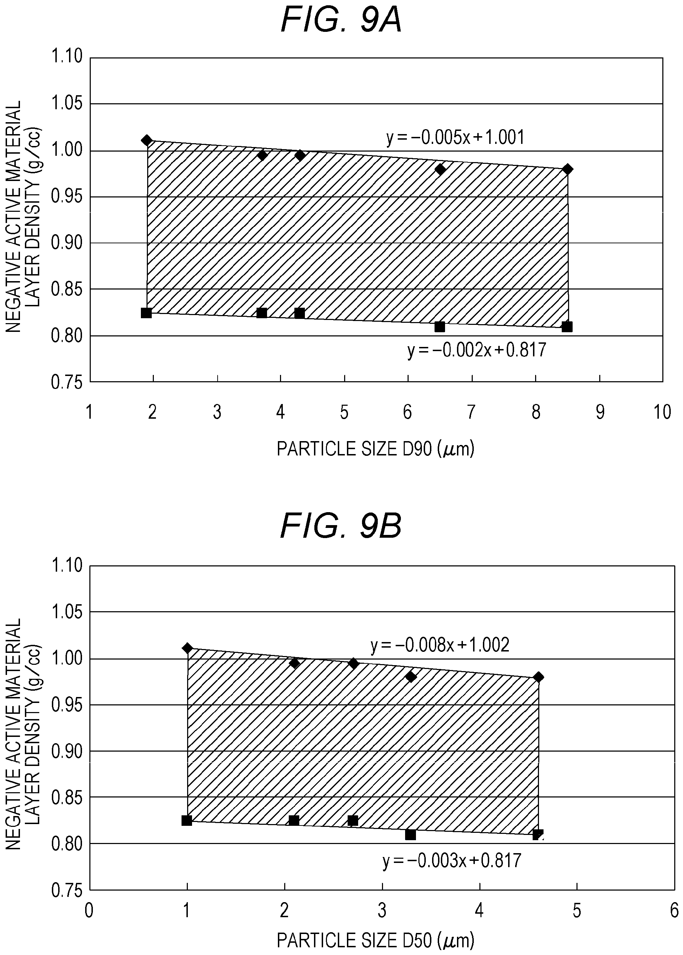

A relationship between the particle size D90 and the negative active material layer density described above is shown in Fig. 9A. Fig. 9A is a graph showing a relationship between the particle size D90 and the negative active material layer density. Specifically, Fig. 9A shows with hatched lines a range of the particle size D90 and the negative active material layer density in which power and durability can be increased.

As shown in Fig. 9A, the hatched line part is a region in which where the negative active material layer density (y axis) is A1 g/cc and the particle size D90 (x axis) is B1 µm, the relationship of (-0.002 × B1 + 0,817) ≤ A1 ≤ (-0.005 × B1 + 1.001) and 1.9 ≤ B1 ≤ 8.5 (relational formula 1) is satisfied.

That is, the hatched line part is a region within a quadrangle (trapezoid) formed by linking a point at which the particle size D90 is 1.9 µm and the negative active material layer density is 1.01 g/cc, a point at which the particle size D90 is 8.5 µm and the negative active material layer density is 0.98 g/cc, a point at which the particle size D90 is 8.5 µm and the negative active material layer density is 0.81 g/cc and a point at which the particle size D90 is 1.9 µm and the negative active material layer density is 0.82 g/cc.

Fig. 9B is a graph showing a relationship between the particle size D50 and the negative active material layer density. Specifically, Fig. 9B shows with hatched lines a range of the particle size D50 and the negative active material layer density which corresponds to the range of the particle size D90 and the negative active material layer density shown in Fig. 9A.

As shown in Fig. 9B, the hatched line part is a region in which where the negative active material layer density (y axis) is A2 g/cc and the particle size D90 (x axis) is B2 µm, the relationship of (-0.003 × B2 + 0.817) ≤ A2 ≤ (-0.008 × B2 + 1.002) and 1.0 ≤ B2 ≤ 4.6 (relational formula 2) is satisfied.

That is, the hatched line part is a region within a quadrangle (trapezoid) formed by linking a point at which the particle size D50 is 1.0 µm and the negative active material layer density is 1.01 g/cc, a point at which the particle size D50 is 4.6 µm and the negative active material layer density is 0.98 g/cc, a point at which the particle size D50 is 4.6 µm and the negative active material layer density is 0.81 g/cc and a point at which the particle size D50 is 1.0 µm and the negative active material layer density is 0.82 g/cc.

Next, batteries in Examples 73 to 91 described later were prepared in the following manner. Examples 73 to 91 all relate to the battery 10 according to the embodiment described above.

That is, for Examples 73, 80, 84 and 88, LiNi_{3/5}Co_{1/5}Mn_{1/5}O₂ was used as a positive active material in the positive electrode in place of LiNi_{1/3}Co_{1/3}Mn_{1/3}O₂ in Examples 1 to 72 and Comparative Examples 1 to 35. For Examples 74, 81, 85 and 89, LiNi_{1/2}Co_{1/5}Mn_{3/10}O₂ was used. For Examples 75, 82, 86 and 90, LiNi_{1/2}Co_{3/10}Mn_{1/5}O₂ was used. For Examples 76, 83, 87 and 91, LiNi_{4/5}Co_{1/10}Mn_{1/10}O₂ was used. LiCoO₂ was used for Example 77, LiMn₂O₄ was used for example 78, and LiFePO₄ was used for Example 79.

In the negative electrode, a negative active material similar to that in Example 32 (particle size D50: 2.7 µm; particle size D90: 4.3 µm; negative active material layer density: 0.90 g/cc) was used for Examples 73 to 79. A negative active material similar to that in Example 44 (particle size D50: 3.3 µm; particle size D90: 6.5 µm; negative active material layer density: 0.89 g/cc) was used for Examples 80 to 83. A negative active material similar to that in Example 3 (particle size D50: 1.0 µm; particle size D90: 1.9 µm; negative active material layer density: 0.98 g/cc) was used for Examples 84 to 87. A negative active material similar to that in Example 11 (particle size D50: 1.0 µm; particle size D90: 1.9 µm; negative active material layer density: 0.86 g/cc) was used for Examples 88 to 91.

Here, Examples 32 and 44 are examples in the middle of the range shown by Examples 1 to 72 in Table 1. Examples 3 and 11 are examples that show excellent performance among Examples 1 to 72 (Example 11 shows a high capacity after degradation and a high capacity retention ratio, and Example 3 shows high power after degradation and a high power retention ratio).

Thus, Examples 73 to 83 are examples in which the positive active material is changed using a negative active material having a value in the middle of the range in which the negative active material is changed. Examples 84 to 91 are examples in which the positive active material is changed using a negative active material exhibiting excellent performance in the range in which the negative active material is changed.

Other components such as the separator and the nonaqueous electrolyte were similar to those in Examples 1 to 72 and Comparative Examples 1 to 35.

For each of the batteries of Examples 73 to 91 prepared in the manner described above, a relationship between the positive active material and the negative active material is shown in Table 8 below. Results of tests conducted in the same manner as in Examples 1 to 72 and Comparative Examples 1 to 35 for each of the batteries of Examples 73 to 91 are shown in Tables 9 and 10 below. That is, Table 9 shows an initial capacity (Ah), a capacity (Ah) after degradation and a capacity decreasing rate (%) for each of the batteries of the examples. Table 10 shows initial power (W), power (W) after degradation and a power decreasing rate (%) for each of the batteries of the examples.

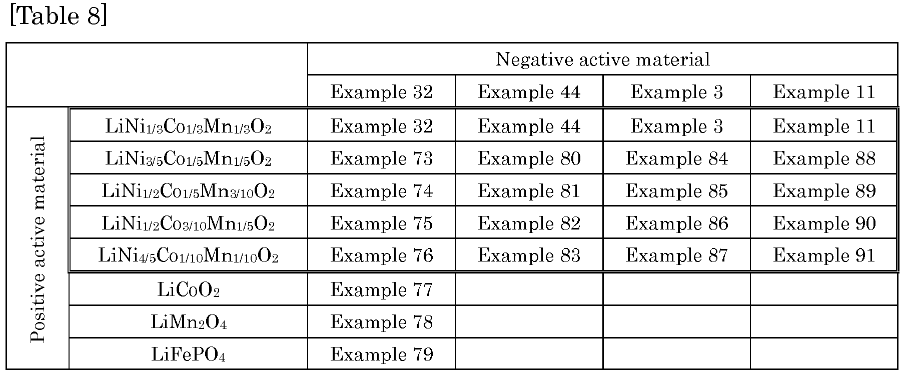

**[Table 9]**

| | Negative active material | | | Positive active material | Initial capacity | Capacity after degradation | Capacity decreasing rate |
|---|---|---|---|---|---|---|---|
| | D50 | D90 | Density | | | | |
| Example 32 | 2.7 | 4.3 | 0.90 | LiNi_{1/3}Co_{1/3}Mn_{1/3}O₂ | 4.39 | 3.96 | 10 |
| Example 73 | 2.7 | 4.3 | 0.90 | LiNi_{3/5}Co_{1/5}Mn_{1/5}O₂ | 4.75 | 3.90 | 18 |
| Example 74 | 2.7 | 4.3 | 0.90 | LiNi_{1/2}CO_{1/5}Mn_{3/10}O₂ | 4.59 | 3.86 | 16 |
| Example 75 | 2.7 | 4.3 | 0.90 | LiNi_{1/2}Co_{3/10}Mn_{1/5}O₂ | 4.66 | 3.96 | 15 |
| Example 76 | 2.7 | 4.3 | 0.90 | LiNi_{4/5}Co_{1/10}Mn_{1/10}O₂ | 4.79 | 4.17 | 13 |
| Example 77 | 2.7 | 4.3 | 0.90 | LiCoO₂ | 4.61 | 3.78 | 18 |
| Example 78 | 2.7 | 4.3 | 0.90 | LiMn₂O₄ | 4.41 | 3.31 | 25 |
| Example 79 | 2.7 | 4.3 | 0.90 | LiFePO₄ | 4.55 | 3.69 | 19 |
| Example 44 | 3.3 | 6.5 | 0.89 | LiNi_{1/3}Co_{1/3}Mn_{1/3}O₂ | 4.37 | 3.89 | 11 |
| Example 80 | 3.3 | 6.5 | 0.89 | LiNi_{3/5}Co_{1/5}Mn_{1/5}O₂ | 4.77 | 3.86 | 19 |
| Example 81 | 3.3 | 6.5 | 0.89 | LiNi_{1/2}Co_{1/5}Mn_{3/10}O₂ | 4.58 | 3.94 | 14 |
| Example 82 | 3.3 | 6.5 | 0.89 | LiNi_{1/2}Co_{3/10}Mn_{1/5}O₂ | 4.64 | 4.18 | 10 |
| Example 83 | 3.3 | 6.5 | 0.89 | LiNi_{4/5}Co_{1/10}Mn_{1/10}O₂ | 4.81 | 4.33 | 10 |
| Example 3 | 1.0 | 1.9 | 0.98 | LiNi_{1/3}Co_{1/3}Mn_{1/3}O₂ | 4.53 | 3.99 | 12 |
| Example 84 | 1.0 | 1.9 | 0.98 | LiNi_{3/5}Co_{1/5}Mn_{1/5}O₂ | 4.73 | 4.02 | 15 |
| Example 85 | 1.0 | 1.9 | 0.98 | LiNi_{1/2}Co_{1/5}Mn_{3/10}O₂ | 4.61 | 3.96 | 14 |
| Example 86 | 1.0 | 1.9 | 0.98 | LiNi_{1/2}Co_{3/10}Mn_{1/5}O₂ | 4.68 | 4.12 | 12 |
| Example 87 | 1.0 | 1.9 | 0.98 | LiNi_{4/5}Co_{1/10}Mn_{1/10}O₂ | 4.82 | 4.39 | 9 |
| Example 11 | 1.0 | 1.9 | 0.86 | LiNi_{1/3}Co_{1/3}Mn_{1/3}O₂ | 4.32 | 3.97 | 8 |
| Example 88 | 1.0 | 1.9 | 0.86 | LiNi_{3/5}Co_{1/5}Mn_{1/5}O₂ | 4.71 | 3.91 | 17 |
| Example 89 | 1.0 | 1.9 | 0.86 | LiNi_{1/2}Co_{1/5}Mn_{3/10}O₂ | 4.63 | 3.94 | 15 |
| Example 90 | 1.0 | 1.9 | 0.86 | LiNi_{1/2}Co_{3/10}Mn_{1/5}O₂ | 4.65 | 4.19 | 10 |
| Example 91 | 1.0 | 1.9 | 0.86 | LiNi_{4/5}Co_{1/10}Mn_{1/10}O₂ | 4.84 | 4.26 | 12 |

**[Table 10]**

| | Negative active material | | | Positive active material | Initial power | Power after degradation | Power decreasing rate |
|---|---|---|---|---|---|---|---|
| | D50 | D90 | Density | | | | |
| Example 32 | 2.7 | 4.3 | 0.90 | LiNi_{1/3}Co_{1/3}Mn_{1/3}O₂ | 339 | 319 | 6 |
| Example 73 | 2.7 | 4.3 | 0.90 | LiNi_{3/5}Co_{1/5}Mn_{1/5}O₂ | 342 | 318 | 7 |
| Example 74 | 2.7 | 4.3 | 0.90 | LiNi_{1/2}Co_{1/5}Mn_{3/10}O₂ | 330 | 301 | 9 |
| Example 75 | 2.7 | 4.3 | 0.90 | LiNi_{1/2}Co_{3/10}Mn_{1/5}O₂ | 335 | 308 | 8 |
| Example 76 | 2.7 | 4.3 | 0.90 | LiNi_{4/5}Co_{1/10}Mn_{1/10}O₂ | 275 | 234 | 15 |
| Example 77 | 2.7 | 4.3 | 0.90 | LiCoO₂ | 348 | 296 | 15 |
| Example 78 | 2.7 | 4.3 | 0.90 | LiMn₂O₄ | 326 | 222 | 32 |
| Example 79 | 2.7 | 4.3 | 0.90 | LiFePO₄ | 310 | 223 | 28 |
| Example 44 | 3.3 | 6.5 | 0.89 | LiNi_{1/3}Co_{1/3}Mn_{1/3}O₂ | 323 | 310 | 4 |
| Example 80 | 3.3 | 6.5 | 0.89 | LiNi_{3/5}Co_{1/5}Mn_{1/5}O₂ | 327 | 308 | 6 |
| Example 81 | 3.3 | 6.5 | 0.89 | LiNi_{1/2}Co_{1/5}Mn_{3/10}O₂ | 328 | 298 | 9 |
| Example 82 | 3.3 | 6.5 | 0.89 | LiNi_{1/2}Co_{3/10}Mn_{1/5}O₂ | 327 | 298 | 9 |
| Example 83 | 3.3 | 6.5 | 0.89 | LiNi_{4/5}Co_{1/10}Mn_{1/10}O₂ | 335 | 298 | 11 |
| Example 3 | 1.0 | 1.9 | 0.98 | LiNi_{1/3}Co_{1/3}Mn_{1/3}O₂ | 415 | 394 | 5 |
| Example 84 | 1.0 | 1.9 | 0.98 | LiNi_{3/5}Co_{1/5}Mn_{1/5}O₂ | 425 | 387 | 9 |
| Example 85 | 1.0 | 1.9 | 0.98 | LiNi_{1/2}Co_{1/5}Mn_{3/10}O₂ | 413 | 384 | 7 |
| Example 86 | 1.0 | 1.9 | 0.98 | LiNi_{1/2}Co_{3/10}Mn_{1/5}O₂ | 408 | 379 | 7 |
| Example 87 | 1.0 | 1.9 | 0.98 | LiNi_{4/5}Co_{1/10}Mn_{1/10}O₂ | 432 | 389 | 10 |
| Example 11 | 1.0 | 1.9 | 0.86 | LiNi_{1/3}Co_{1/3}Mn_{1/3}O₂ | 404 | 388 | 4 |
| Example 88 | 1.0 | 1.9 | 0.86 | LiNi_{3/5}Co_{1/5}Mn_{1/5}O₂ | 415 | 382 | 8 |
| Example 89 | 1.0 | 1.9 | 0.86 | LiNi_{1/2}Co_{1/5}Mn_{3/10}O₂ | 410 | 377 | 8 |
| Example 90 | 1.0 | 1.9 | 0.86 | LiNi_{1/2}Co_{3/10}Mn_{1/5}O₂ | 411 | 386 | 6 |
| Example 91 | 1.0 | 1.9 | 0.86 | LiNi_{4/5}Co_{1/10}Mn_{1/10}O₂ | 435 | 383 | 12 |

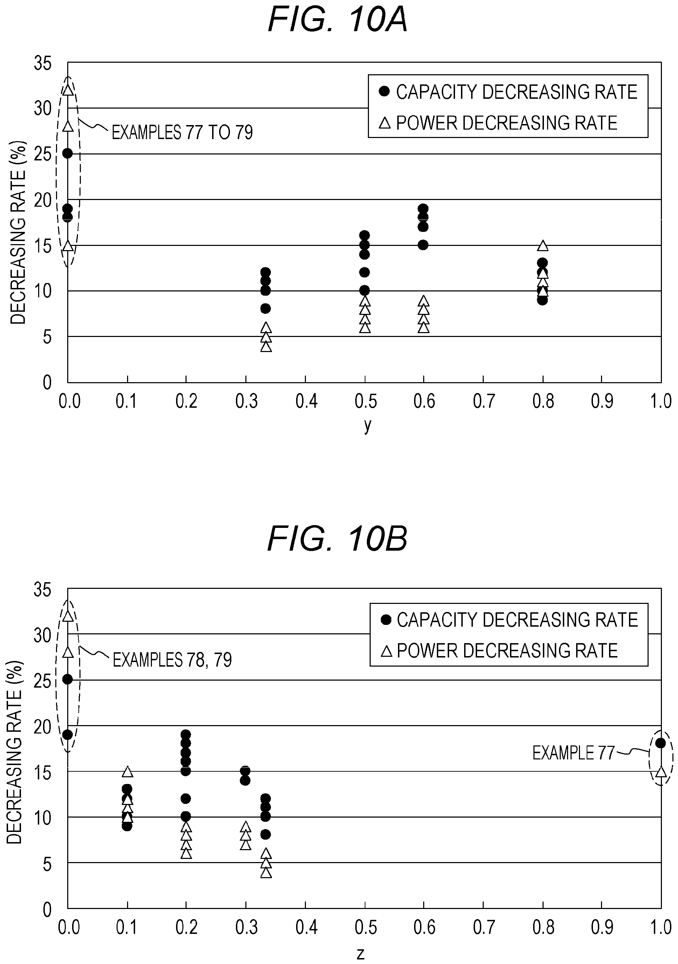

Fig. 10A is a graph showing a capacity decreasing rate and a power decreasing rate when the value of y in the positive active material: LiₓNi_{y}Co_{z}Mn_{(1-y-z)}O₂ is changed. Fig. 10B is a graph showing a capacity decreasing rate and a power decreasing rate when the value of z in the positive active material: LiₓNi_{y}Co_{z}Mn_{(1-y-z)}O₂ is changed.

First, as shown in Tables 9 and 10 and Fig. 10A, the capacity decreasing rate and the power decreasing rate in Examples 73 to 76 and 80 to 91 are each kept at a low value, while the capacity decreasing rate and the power decreasing rate in Examples 77 to 79 sharply increase. That is, when the value of y in the positive active material: LiₓNi_{y}Co_{z}Mn_{(1-y-z)}O₂ is 0 < y < 1, a decrease in capacity and power due to degradation can be suppressed to increase power and durability. Particularly, when the value of y in the positive active material: LiₓNi_{y}Co_{z}Mn_{(1-y-z)}O₂ is 0.33 ≤ y ≤ 0.80 (or 1/3 ≤ y ≤ 0.80), a low capacity decreasing rate and a low output decreasing rate are achieved, and therefore it is preferred to satisfy 0.33 ≤ y ≤ 0.80.

A low power decreasing rate is achieved when the value of y in the positive active material: LiₓNi_{y}Co_{z}Mn_{(1-y-z)}O₂ is 0.33 ≤ y ≤ 0.60, and the lowest power decreasing rate (and capacity decreasing rate) is achieved when the value of y is y = 1/3. Therefore, it is further preferred to satisfy 0.33 ≤ y ≤ 0.60, and it is particularly preferred to satisfy y = 1/3.

As shown in Tables 9 and 10 and Fig. 10B, the capacity decreasing rate and the power decreasing rate in Examples 73 to 76 and 80 to 91 are each kept at a low value, while the capacity decreasing rate and the power decreasing rate in Examples 77 to 79 sharply increase. That is, when the value of z in the positive active material: LiₓNi_{y}Co_{z}Mn_{(1-y-z)}O₂ is 0 < z < 1, a decrease in capacity and power due to degradation can be suppressed to increase power and durability. Particularly, when the value of z in the positive active material: LiₓNi_{y}Co_{z}Mn_{(1-y-z})O₂ is 0.10 ≤ z ≤ 0.34 (or 0.10 ≤ z ≤ 1/3), a low capacity decreasing rate and a low output decreasing rate are achieved, and therefore it is preferred to satisfy 0.10 ≤ z ≤ 0.34.

A low power decreasing rate is achieved when the value of z in the positive active material: LiₓNi_{y}Co_{z}Mn_{(1-y-z)}O₂ is 0.20 ≤ z ≤ 0.34, and the lowest power decreasing rate (and capacity decreasing rate) is achieved when the value of z is z = 1/3. Therefore, it is further preferred to satisfy 0.20 ≤ z ≤ 0.34, and it is particularly preferred to satisfy z = 1/3.

In the above examples, y + z < 1, i.e. 0 < 1 - y -z is satisfied. In the above examples, the value of x in the positive active material: LiₓNi_{y}Co_{z}Mn_{(1-y-z)}O₂ is 1, but when the value of x is in the range of 0.9 ≤ x ≤ 1.2 or 0.9 ≤ x ≤ 1.5, an effect similar to the effect described above is exhibited.

Thus, when 0.9 ≤ x ≤ 1.5, 0 < y < 1,0 < z < 1 and 0 < 1 - y - z is satisfied in the positive active material: LiₓNi_{y}Co_{z}Mn_{(1-y-z)}O₂, power and durability can be increased. That is, it is preferred to satisfy 0.9 ≤ x ≤1.5, 0 < y < 1, 0 < z < 1 and 0 < 1 - y - z in the positive active material:

LiₓNi_{y}Co_{z}Mn_{(1-y-z)}O₂.

Particularly, when 0.9 ≤ x ≤ 1.2, 0.33 ≤ y ≤ 0.80, 0.10 ≤ z ≤ 0.34 and 0 < 1 - y - z is satisfied in the positive active material: LiₓNi_{y}Co_{z}Mn_{(1-y-z)}O₂, power and durability can be increased. That is, it is further preferred to satisfy 0.9 ≤ x ≤ 1.2, 0.33 ≤ y ≤ 0.80, 0.10 ≤ z ≤ 0.34 and 0 < 1 - y - z in the positive active material: LiₓNi_{y}Co_{z}Mn_{(1-y-z)}O₂.

From the viewpoint of increasing power, y and z preferably satisfy 0.33 ≤ y ≤ 0.60 and 0.20 ≤ z ≤ 0.34, and further preferably satisfy y = 1/3 and z = 1/3 (LiₓNi_{1/3}Co_{1/3}Mn_{1/3}O₂ is used as a positive active material).

In Examples 73 to 91, the positive active material is changed using a negative active material having a value in the middle or a negative active material exhibiting excellent performance among the negative active materials in Examples 1 to 72, but an effect similar to the effect described above is exhibited when the negative active material is changed within the range of Examples 1 to 72.

As described above, the inventors of the present application have extensively conducted studies and experiments, and resultantly found that when the negative electrode includes a negative active material layer containing hardly-graphitizable carbon as a negative active material and an aqueous binder, the active material filling density of the negative active material layer (negative active material layer density) is not less than 0.81 g/cc and not more than 1.01 g/cc, and the particle size D90 of the negative active material is not less than 1.9 µm and not more than 11.5 µm, power and durability can be increased. That is, when the negative active material layer density is made excessively low, current collection characteristics are deteriorated, so that a high capacity and high power cannot be achieved. When the negative active material layer density is made excessively high, the capacity and power are significantly reduced due to degradation, so that durability is reduced. Thus, when the negative active material layer density falls within a proper range, durability can be increased while a high capacity and high power are maintained. When the particle size of the negative active material is made excessively small, the capacity and power are significantly reduced due to degradation, so that durability is reduced, and when the negative active material has a large amount of coarse particles, power is reduced because contact between the negative active materials having a small particle size becomes insufficient with the coarse particles forming a pillar when the positive electrode 410, the negative electrode 420 and the separators 431 and 432 are superimposed and pressed so as to decrease the electrode thickness. Thus, when the particle size D90 of the negative active material falls within a proper range, durability can be increased while a high capacity and high power are maintained.

In the embodiment described above, the negative electrode 420 of the battery 10 contains an aqueous binder. Here, the inventors of the present application have found that when a solvent-based binder is used for the negative electrode of the battery, durability is improved as the press pressure is increased because the press pressure during preparation of the negative electrode is proportional to the peel strength of the negative active material. However, when an aqueous binder is used for the negative electrode of the battery, the peel strength tends to be reduced, leading to a reduction in durability as the press pressure is increased (the density is increased). The inventors of the present application have found that when the particle size D90 of the negative active material layer density falls within a proper range (a proper press pressure is achieved), durability can be increased while a high capacity and high power are maintained.

The inventors of the present application have extensively conducted studies and experiments, and resultantly found that when the negative active material layer density and the particle size D90 satisfy the above relational formula 1, power and durability can be further increased. That is, when the particle size D90 of the negative active material falls within a range of not less than 1.9 µm and not more than 8.5 µm, durability can be further increased while a high capacity and high power are maintained in the case where the negative active material layer density is not less than 0.82 g/cc and not more than 1.01 g/cc when the particle size D90 is 1.9 µm, and in the case where the negative active material layer density is not less than 0.81 g/cc and not more than 0.98 g/cc when the particle size D90 is 8.5 µm.

The particle size D50 of the negative active material is not less than 1.0 µm and not more than 5.9 µm when the particle size D90 of the negative active material is not less than 1.9 µm and not more than 11.5 µm, and therefore when the particle size D50 falls within the above-mentioned range, power and durability can be increased.

The particle size D50 of the negative active material is not less than 1.0 µm and not more than 4.6 µm when the particle size D90 of the negative active material is not less than 1.9 µm and not more than 8.5 µm, and therefore when the negative active material layer density and the particle size D50 satisfy the above relational formula 2, power and durability can be further increased. That is, when the particle size D50 falls within a range of not less than 1.0 µm and not more than 4.6 µm, durability can be further increased while a high capacity and high power are maintained in the case where the negative active material layer density is not less than 0.82 g/cc and not more than 1.01 g/cc when the particle size D50 is 1.0 µm, and in the case where the negative active material layer density is not less than 0.81 g/cc and not more than 0.98 g/cc when the particle size D50 is 4.6 µm.

When the negative active material layer density is excessively increased, the creases may occur in the negative electrode 420 to make it difficult to prepare the electrode assembly 400. Even though the electrode assembly 400 is prepared, durability may be reduced when the electrode assembly 400 is used. That is, the negative electrode current collector 130 is bonded to the negative active material non-formed region 421a, so that the negative electrode 420 is fixed to the negative electrode current collector 130, but when the negative active material layer density is high, creases may occur between the region where the negative active material layer 422 is formed and the negative active material non-formed region 421a. On the other hand, according to the battery 10, occurrence of the creases can be suppressed when the negative active material layer density falls within a proper range.

In the battery 10 using as a positive active material a lithium transition metal oxide containing at least one of manganese, cobalt and nickel, power and durability can be increased.

The inventors of the present application have found that when a lithium transition metal composite oxide represented by the composition formula: LiₓNi_{y}Co_{z}Mn_{(1-y-z)}O₂ (where 0.9 ≤ x ≤ 1.5, 0 < y < 1,0 < z < 1 and 0 < 1 - y - z) is used as a positive active material, power and durability can be increased. Thus, by using as a positive active material a lithium transition metal composite oxide represented by the above composition formula, power and durability can be increased.

The inventors of the present application have found that when a lithium transition metal composite oxide represented by the composition formula: LiₓNi_{y}Co_{z}Mn_{(1-y-z)}O₂ (where 0.9 ≤ x ≤ 1.2, 0.33 ≤ y ≤ 0.80, 0.10 ≤ z ≤ 0.34 and 0 < 1 - y - z) is used as a positive active material, power and durability can be further increased. Thus, by using as a positive active material a lithium transition metal composite oxide represented by the above composition formula, power and durability can be further increased. A film forming material for the negative electrode 420 is added in the nonaqueous electrolyte, and therefore power and durability can be further increased.

The battery 10 according to the embodiment of the present invention has been described above, but the present invention is not limited to the embodiment. That is, the embodiment disclosed herein is illustrative in every aspect, and should not be construed as limiting the present invention. The scope of the present invention is shown by claims rather than the foregoing descriptions, and the present invention is intended to include all changes within the meanings and copes of claims.

For example, in the embodiment described above, the nonaqueous electrolyte contains a film forming material as an additive, but the nonaqueous electrolyte is not required to contain such an additive. Even when such an additive is not contained, power and durability can be increased.

### Industrial Applicability

The present invention can be applied to batteries for HEV, etc. which are required to have increased power and increased durability.

## Claims

1. A lithium-ion battery comprising:
a positive electrode;
a negative electrode including a negative active material layer containing a negative active material and an aqueous binder, wherein the negative active material is hardly-graphitizable carbon;
a separator disposed between the positive electrode and the negative electrode; and
a nonaqueous electrolyte,
wherein the negative active material layer has a density of not less than 0.81 g/cc and not more than 1.01 g/cc, and
the negative active material has a particle size D90 of not less than 1.9 µm and not more than 11.5 µm, the particle size D90 being a particle size at which cumulative volume is 90% in particle size distribution, and
wherein the aqueous binder includes styrene-butadiene rubber, polyacrylate, polyurethane or polyacrylic acid.

2. The lithium-ion battery according to claim 1, wherein where the density of the negative active material layer is A1 g/cc and the particle size D90 of the negative active material is B1 µm,
a relationship of (-0.002 × B1 + 0.817) ≤ A1 ≤ (-0.005 × B1 + 1.001) and 1.9 ≤ B1 ≤ 8.5 is satisfied.

3. The lithium-ion battery according to claim 1 or 2, wherein the negative active material has a particle size D50 of not less than 1.0 µm and not more than 5.9 µm, the particle size D50 being a particle size at which the cumulative volume is 50% in the particle size distribution.

4. The lithium-ion battery according to claim 3, wherein where the density of the negative active material layer is A2 g/cc and the particle size D50 of the negative active material is B2 µm,
a relationship of (-0.003 × B2 + 0.817) ≤ A2 ≤ (-0.008 × B2 + 1.002) and 1.0 ≤ B2 ≤ 4.6 is satisfied.

5. The lithium-ion battery according to any one of claims 1 to 4, wherein the positive electrode includes as a positive active material a lithium transition metal oxide containing at least one of manganese, cobalt and nickel.

6. The lithium-ion battery according to claim 5, wherein the positive electrode includes as a positive active material a lithium transition metal composite oxide represented by the composition formula: LiₓNi_{y}Co_{z}Mn_{(1-y-z)}O₂ (where 0.9 ≤ x ≤ 1.5, 0 < y < 1, 0 < z < 1 and 0 < 1 - y - z).

7. The lithium-ion battery according to claim 6, wherein the positive electrode includes as a positive active material a lithium transition metal composite oxide represented by the composition formula: LiₓNi_{y}Co_{z}Mn_{(1-y-z)}O₂ (where 0.9 ≤ x ≤ 1.2, 0.33 ≤ y ≤ 0.80, 0.10 ≤ z ≤ 0.34 and 0 < 1 - y - z).

8. The lithium-ion battery according to any one of claims 1 to 7, wherein the nonaqueous electrolyte contains as an additive a film forming material for forming a film on a surface of the negative electrode.

## Patentansprüche

1. Lithiumionenbatterie, umfassend:
eine positive Elektrode;
eine negative Elektrode, die eine negative Aktivmaterialschicht enthält, die ein negatives aktives Material und ein Bindemittel enthält, wobei das negative aktive Material ein kaum zu graphitisierender Kohlenstoff ist;
ein Separator, der zwischen der positiven Elektrode und der negativen Elektrode angeordnet ist; und
ein nicht wässriges Elektrolyt,
wobei die negative Aktivmaterialschicht eine Dichte von nicht weniger als 0,81 g/cm³ und nicht mehr als 1,01 g/cm³ aufweist, und
das negative Aktivmaterial eine Teilchengröße D90 von nicht weniger als 1,9 µm und nicht mehr als 11,5 µm aufweist, wobei die Teilchengröße D90 eine Teilchengröße ist, bei der das kumulative Volumen in der Teilchengrößenverteilung 90 % beträgt, und
wobei das wässrige Bindemittel Styrol-Butadienkautschuk, Polyacrylat, Polyurethan oder Polyacrylsäure enthält.

2. Lithiumionenbatterie nach Anspruch 1, wobei, wenn die Dichte der negativen Materialschicht A1 g/ cm³ und die Teilchengröße D90 der negativen Materialschicht B1 µm beträgt,
ein Verhältnis von (-0,002 × B1 + 0,817) ≤ A1 ≤ (-0,005 × B1 + 1,001) und 1,9 ≤ B1 ≤ 8,5 erfüllt ist.

3. Lithiumionenbatterie nach Anspruch 1 oder 2, wobei das negative aktive Material eine Teilchengröße D50 von nicht weniger als 1,0 µm und nicht mehr als 5,9 µm aufweist, wobei die Teilchengröße D50 eine Teilchengröße ist, bei der das kumulative Volumen in der Teilchengrößenverteilung 50 % beträgt.

4. Lithiumionenbatterie nach Anspruch 3, wobei, wenn die Dichte der negativen Aktivmaterialschicht A2 g/cm³ und die Teilchengröße D50 des negativen aktiven Materials B2 µm beträgt,
ein Verhältnis von (-0,003 × B2 + 0,817) ≤ A2 ≤ (-0,008 × B2 + 1,002) und 1,0 ≤ B2 ≤ 4,6 erfüllt ist.

5. Lithiumionenbatterie nach einem der Ansprüche 1 bis 4, wobei die positive Elektrode als ein positives Aktivmaterial ein Lithiumübergangsmetalloxid enthält, das mindestens eines aus Mangan, Kobalt und Nickel enthält.

6. Lithiumionenbatterie nach Anspruch 5, wobei die positive Elektrode als ein positives Aktivmaterial ein Lithiumübergangsmetallkompositoxid enthält, das durch die folgende Zusammensetzungsformel dargestellt ist: LiₓNi_{y}Co_{z}Mn_{(1-y-z)}O₂ (worin 0,9 ≤ x ≤ 1,5, 0 < y < 1,0 < z < 1 und 0 < 1 - y - z).

7. Lithiumionenbatterie nach Anspruch 6, wobei die positive Elektrode als ein positives Aktivmaterial ein Lithiumübergangsmetallkompositoxid enthält, das durch die folgende Zusammensetzungsformel dargestellt ist: LiₓNi_{y}Co_{z}Mn_{(1-y-z)}O₂ (worin 0,9 ≤ x ≤ 1,2, 0,33 ≤ y ≤ 0,80, 0,10 ≤ z ≤ 0,34 und 0 <1-y-z).

8. Lithiumionenbatterie nach einem der Ansprüche 1 bis 7, wobei das nicht wässrige Elektrolyt als ein Additiv ein folienbildendes Material zur Bildung einer Folie auf einer Oberfläche der negative Elektrode enthält.

## Revendications

1. Batterie aux ions lithium comprenant :
une électrode positive ;
une électrode négative comprenant une couche de matériau actif négatif contenant un matériau actif négatif et un liant aqueux, où le matériau actif négatif est du carbone se transformant difficilement en graphite ;
un séparateur placé entre l'électrode positive et l'électrode négative ; et
un électrolyte non aqueux,
dans laquelle la couche de matériau actif négatif a une densité qui n'est pas inférieure à 0,81 g / cm³ et qui n'est pas supérieure à 1,01 g / cm³, et
le matériau actif négatif a une taille des particules D90 qui n'est pas inférieure à 1,9 µm et qui n'est pas supérieure à 11,5 µm, la taille des particules D90 étant la taille des particules pour laquelle le volume cumulé représente 90 % de la distribution des tailles des particules, et
dans laquelle le liant aqueux comprend du caoutchouc styrène-butadiène, du polyacrylate, du polyuréthane ou de l'acide polyacrylique.

2. Batterie aux ions lithium selon la revendication 1, dans laquelle, là où la densité de la couche de matériau actif négatif est A1 g /cm³ et la taille des particules D90 du matériau actif négatif est B1 µm,
la relation (- 0,002 × B1 + 0,817) ≤ A1 ≤ (- 0,005 × B1 + 1,001) et 1,9 ≤ B1 ≤ 8,5 est satisfaite.

3. Batterie aux ions lithium selon la revendication 1 ou 2, dans laquelle le matériau actif négatif a une taille des particules D50 qui n'est pas inférieure à 1,0 µm et qui n'est pas supérieure à 5,9 µm, la taille des particules D50 étant la taille des particules pour laquelle le volume cumulé représente 50 % de la distribution des tailles des particules.

4. Batterie aux ions lithium selon la revendication 3, dans laquelle, là où la densité de la couche du matériau actif négatif est A2 g / cm³ et la taille des particules D50 du matériau actif négatif est B2 µm,
la relation (- 0,003 × B2 + 0,817) ≤ A2 ≤ (-0,008 × B2 + 1,002) et 1,0 B2 4,6 est satisfaite.

5. Batterie aux ions lithium selon l'une quelconque des revendications 1 à 4, dans laquelle l'électrode positive comprend en tant que matériau actif positif un oxyde d'un métal de transition et de lithium contenant au moins un métal de transition parmi le manganèse, le cobalt et le nickel.

6. Batterie aux ions lithium selon la revendication 5, dans laquelle l'électrode positive comprend en tant que matériau actif positif un oxyde composite de métaux de transition représenté par la formule de composition : LiₓNi_{y}Co_{z}Mn_{(1-y-z)}O₂ (où 0,9 ≤ x ≤ 1,5, 0 < y < 1, 0 < z < 1 et 0 < 1 - y - z).

7. Batterie aux ions lithium selon la revendication 6, dans laquelle l'électrode positive comprend en tant que matériau actif positif un oxyde composite de métaux de transition et de lithium représenté par la formule de composition : LiₓNi_{y}Co_{z}Mn(₁-_{y}-_{z})O₂ (où 0,9 ≤ x ≤ 1,2, 0,33 ≤ y ≤ 0,80, 0,10 ≤ z ≤ 0,34 et 0 < 1-y-z).

8. Batterie aux ions lithium selon l'une quelconque des revendications 1 à 7, dans laquelle l'électrolyte non aqueux contient en tant qu'additif un matériau filmogène pour former un film sur la surface de l'électrode négative.
